# EUROPEAN PATENT APPLICATION

(11) **EP 4 571 575 A1**
(43) Date of publication of application: **18.06.2025**
(21) Application number: 23217273.4
(22) Date of filing: 15.12.2023
(51) Int. Cl.: G06N 3/045, G06N 3/0985, G06N 5/01, G06N 20/10, G06N 3/082, G06N 3/096, G06N 3/084

(54) **DECOMPOSED SPECTRA ANALYSIS FOR LARGE MODEL SELECTION AND OPTIMIZATION**

(71) Applicant: Tempus AI, Inc., Chicago, IL 60654 (US)
(72) Inventor: VOLD, Andrew William, Chicago, 60654 (US)
(74) Representative: Grund, Martin

(57) **Abstract**

Systems and methods for identifying a model to perform a task are provided. Each model in a plurality of models is inputted with information for each sample in a plurality of samples. Subsets of samples correspond to labels. Spectra are obtained from outputs of layers in the models by applying parameters against the information. The spectra are dimension reduced to obtain component value sets that correspond to samples and collectively have an explained variance of at least a threshold amount of the total variance. For each model, a divergence is determined using a mathematical combination of a plurality of distances, where each distance is between each label subset of samples relative to all other samples. A model having a divergence satisfying a threshold is identified to perform the task. Systems and methods for updating the architecture of a model to perform a task are also provided.

## Description

### TECHNICAL FIELD

The present disclosure relates generally to systems and methods for selecting and optimizing machine learning models, particularly for use in natural language processing.

### BACKGROUND

The emergence of deep learning models (DLMs) has taken the natural language processing (NLP) world by storm. The paradigm of obtaining a DLM and subsequently finetuning it on a set of labeled data has become ubiquitous in the machine learning landscape. As a result, there is a vast number of pretrained and fine-tuned DLMs available to the public. This greatly reduces the amount of time, resources, and data that a research team would need to be successful on their task. However, the choice of pretrained or finetuned models for the downstream fine-tuning task can vary greatly. For this reason, the existence of a heuristic for model selection can save a great amount of time and energy, compared to the effort and time needed to train several different models and choose the most performant one.

### SUMMARY

Given the above background, what is needed in the art are improved methods and systems for selecting and optimizing models from a variety of possible pretrained models, particularly for use in natural language processing tasks. The present disclosure addresses these and other problems by comparing label-dependent spectra from the output of pretrained models to identify those pretrained models that are better suited for the downstream task of interest, and by reducing the size and complexity of the pretrained models to those subsets that have greater information capacity. The disclosed systems and methods improve the process of obtaining machine learning models for performing particular tasks by reducing the time, effort, and computational burden of laboriously training and validating multiple models, as well as reducing the complexity of such models using a pruning procedure.

Accordingly, one aspect of the present disclosure provides a method for identifying a model to perform a first categorical task. In some embodiments, the method is performed at a computer system that includes one or more processors and memory. In some embodiments, the method includes inputting, into each respective model in a plurality of models, wherein each respective model in the plurality of models was pretrained, at least in part, on a respective task other than the first categorical task and each respective model comprises a corresponding plurality of layers comprising a corresponding input layer, a corresponding output layer, and a corresponding plurality of hidden layers, for each respective validation sample in a plurality of validation samples, corresponding information into the respective model to obtain, through application of a corresponding plurality of parameters of the respective model against the corresponding information, output from a respective hidden layer in the corresponding plurality of hidden layers in the form of a corresponding spectrum comprising a corresponding plurality of values, wherein the plurality of validation samples comprises, for each respective label in a plurality of labels, a corresponding label subset of validation samples assigned the respective label, thereby obtaining, for each respective model in the plurality of models, a corresponding plurality of spectra having a corresponding total variance across the corresponding plurality of values for each respective validation sample in the plurality of validation samples. In some embodiments, the plurality of validation samples comprises a corresponding subset of validation samples for each respective label in a plurality of labels.

In some embodiments, the method further includes performing, for each respective model in the plurality of models, dimensionality reduction on the corresponding plurality of spectra to obtain a corresponding plurality of component value sets that collectively have an explained variance of at least a threshold amount of the total variance. In some embodiments, the corresponding plurality of component value sets includes a corresponding component value set for each respective validation sample in the plurality of validation samples.

In some embodiments, the method further includes determining, for each respective model in the plurality of models, a corresponding divergence using a mathematical combination of a corresponding plurality of distances, where each respective distance in the corresponding plurality of distances represents a respective label in the plurality of labels and is between (i) the component value sets for the respective label subset of validation samples assigned the respective label and (ii) the component value sets for all other samples in the plurality of samples. In some embodiments, the method further includes identifying a first model in the plurality of models having a corresponding divergence satisfying a threshold to perform the first task.

In some embodiments, the first task comprises determining a patient-medication relationship, determining a patient-biomarker association, or determining a disease condition.

In some embodiments, each respective model in the plurality of models is selected from the group consisting of: a language model, a transformer model, a large language model (LLM), an encoder, a decoder, an encoder-decoder hybrid model, a generative pre-trained transformer (GPT) model, and a Bidirectional Encoder Representations from Transformers (BERT) model. In some embodiments, each respective pretrained model in the plurality of pretrained models is selected from the group consisting of: BERT, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, T5, and/or any derivative or combination thereof.

In some embodiments, one or more models in the plurality of models are pretrained using a set of nonspecific pretraining samples. In some embodiments, one or more models in the plurality of models are pretrained using a set of domain-specific pretraining samples. In some embodiments, the domain is associated with the first task. In some embodiments, one or more models in the plurality of models are fine-tuned for the first task.

In some embodiments, the plurality of models further comprises an untrained model. In some embodiments, the plurality of models comprises at least 5 models.

In some embodiments, for a respective model in the plurality of models, the corresponding plurality of parameters comprises at least 1000 parameters.

In some embodiments, each respective validation sample in the plurality of validation samples comprises all or a portion of an electronic health record (EHR) or electronic medical record (EMR). In some embodiments, the corresponding information for each respective validation sample in the plurality of validation samples comprises one or more corresponding snippets. In some embodiments, the plurality of validation samples comprises at least 100 validation samples.

In some embodiments, the dimensionality reduction is a principal component analysis algorithm, a random projection algorithm, an independent component analysis algorithm, or a feature selection method. In some embodiments, the dimensionality reduction is a principal component analysis (PCA) reduction and where the dimensionality reduction decomposes the plurality of spectra to a respective subset of principal components.

In some embodiments, the threshold amount of the total variance is at least 90%, at least 95%, or at least 99% of the total variance.

In some embodiments, the corresponding plurality of distances are determined in a pairwise manner, between (i) the component value sets for the respective label subset of validation samples and (ii) the component value sets for corresponding label subsets for each other label in the plurality of labels.

In some embodiments, the mathematical combination of the corresponding plurality of distances is a summation of the corresponding plurality of distances. In some embodiments, the corresponding divergence is selected from the group consisting of: total variation distance, Hellinger distance, Lévy-Prokhorov metric, Wasserstein metric, Mahalanobis distance, Amari distance, Kullback-Leibler divergence, Rényi divergence, Jensen-Shannon divergence, Bhattacharyya distance, f-divergence, and discriminability index. In some embodiments, the corresponding divergence is Jensen-Shannon divergence.

In some embodiments, a respective model satisfies the threshold when it has the largest corresponding divergence among the plurality of models

In some embodiments, the identifying further comprises selecting a subset of models in the plurality of models having the top N largest corresponding divergences. In some embodiments, N is a positive integer between 1 and 5.

In some embodiments, the method further includes retraining the first model to perform the first task. In some embodiments, the retraining includes performing a training procedure using the first model on a plurality of training samples to perform the first task.

In some embodiments, the method further includes, prior to the retraining, identifying a subset of layers in a plurality of layers of the first model, and removing layers other than the subset of layers from the first model.

Another aspect of the present disclosure provides a method for updating an architecture of a model to perform a first categorical task. In some embodiments, the method is performed at a computer system that includes one or more processors and memory. In some embodiments, the method includes inputting, for each respective validation sample in a plurality of validation samples, corresponding information into the model to obtain as output from each respective layer in a plurality of layers of the model, a corresponding spectrum comprising a corresponding plurality of values, thereby obtaining a plurality of spectra having a total variance, wherein the model was pretrained on a respective task other than the first categorical task and each layer in the model comprises a corresponding set of pretrained weights.

In some embodiments, the method further includes performing dimensionality reduction on the plurality of spectra to obtain a plurality of component value sets that collectively have an explained variance of at least a threshold amount of the total variance, where the plurality of component value sets includes a corresponding component value set for each respective layer in the plurality of layers.

In some embodiments, the method further includes determining a first layer in the plurality of layers associated with a component value set in the plurality of component value sets having the highest dimensionality, and removing each layer in the plurality of layers downstream of the first layer, thereby updating the architecture of the model to perform the first task.

In some embodiments, the first task comprises determining a patient-medication relationship, determining a patient-biomarker association, or determining a disease condition.

In some embodiments, the model is selected from the group consisting of: a language model, a transformer model, a large language model (LLM), an encoder, a decoder, an encoder-decoder hybrid model, a generative pre-trained transformer (GPT) model, and a Bidirectional Encoder Representations from Transformers (BERT) model. In some embodiments, the model is selected from the group consisting of: BERT, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, T5, and/or any derivative or combination thereof.

In some embodiments, the model is pretrained using a set of nonspecific pretraining samples. In some embodiments, the model is pretrained using a set of domain-specific pretraining samples. In some embodiments, the domain is associated with the first task. In some embodiments, the model is fine-tuned for the first task.

In some embodiments, the plurality of layers comprises at least 5, at least 10, or at least 15 layers. In some embodiments, each respective layer in the plurality of layers comprises a plurality of at least 5, at least 10, or at least 15 nodes.

In some embodiments, the corresponding set of pretrained weights comprises at least 1000 weights. In some embodiments, the model is selected by a method for identifying a model to perform a first task, comprising: A) inputting, into each respective model in a plurality of models, wherein each respective model in the plurality of models was pretrained on a respective task other than the first categorical task and each respective model comprises a corresponding plurality of layers comprising a corresponding input layer, a corresponding output layer, and a corresponding plurality of hidden layers, for each respective validation sample in a plurality of validation samples, corresponding information into the respective model to obtain, through application of a corresponding plurality of parameters of the respective model against the corresponding information, output from a respective hidden layer in the corresponding plurality of hidden layers in the form of a corresponding spectrum comprising a corresponding plurality of values, wherein the plurality of validation samples comprises, for each respective label in a plurality of labels, a corresponding label subset of validation samples assigned the respective label, thereby obtaining, for each respective model in the plurality of models, a corresponding plurality of spectra having a corresponding total variance; B) performing, for each respective model in the plurality of models, dimensionality reduction on the corresponding plurality of spectra to obtain a corresponding plurality of component value sets that collectively have an explained variance of at least a threshold amount of the total variance, wherein the corresponding plurality of component value sets includes a corresponding component value set for each respective validation sample in the plurality of validation samples; C) determining, for each respective model in the plurality of models, a corresponding divergence using a mathematical combination of a corresponding plurality of distances, wherein each respective distance in the corresponding plurality of distances represents a respective label in the plurality of labels and is between (i) the component value sets for the respective label subset of validation samples assigned the respective label and (ii) the component value sets for all other samples in the plurality of samples; and D) identifying a first model in the plurality of models having a corresponding divergence satisfying a threshold to perform the first task.

In some embodiments, each respective validation sample in the plurality of validation samples comprises all or a portion of an electronic health record (EHR) or electronic medical record (EMR). In some embodiments, the corresponding information for each respective validation sample in the plurality of validation samples comprises one or more corresponding snippets. In some embodiments, the plurality of validation samples comprises at least 100 validation samples.

In some embodiments, the dimensionality reduction is a principal component analysis algorithm, a random projection algorithm, an independent component analysis algorithm, or a feature selection method. In some embodiments, the dimensionality reduction is a principal component analysis (PCA) reduction and wherein the dimensionality reduction decomposes the plurality of spectra to a respective subset of principal components. In some embodiments, the threshold amount of the total variance is at least 90%, at least 95%, or at least 99% of the total variance.

In some embodiments, the dimensionality comprises a plurality of principal components determined using the dimensionality reduction. In some embodiments, the plurality of principal components comprises at least 10, at least 100, or at least 1000 principal components.

In some embodiments, the model further comprises a task-dependent output layer downstream of the plurality of layers, and the removing further comprises removing the task-dependent output layer.

In some embodiments, the method further includes retraining the model to perform the first task. In some embodiments, the retraining includes performing a training procedure using the first model on a plurality of training samples to perform the first task.

Another aspect of the present disclosure provides a computer system. The computer system comprises one or more processors and memory addressable by the one or more processors. The memory stores at least one program for execution by the one or more processors. The at least one program comprises instructions for performing any of the methods described herein.

Another aspect of the present disclosure provides a non-transitory computer readable storage medium. The non-transitory computer readable storage medium stores instructions, which when executed by a computer system, cause the computer system to perform any of the methods described herein.

### BRIEF DESCRIPTION OF THE DRAWINGS

In the drawings, embodiments of the systems and method of the present disclosure are illustrated by way of example. It is to be expressly understood that the description and drawings are only for the purpose of illustration and as an aid to understanding, and are not intended as a definition of the limits of the systems and methods of the present disclosure.
FIGS. 1A, 1B, and 1C collectively illustrate a block diagram of example computing devices, in accordance with some embodiments of the present disclosure.
FIGS. 2A, 2B, and 2C collectively provide a flow chart of processes for identifying a model to perform a first task, in which dashed boxes represent optional portions of the method, in accordance with some embodiments of the present disclosure.
FIGS. 3A, 3B, and 3C collectively provide a flow chart of processes for updating an architecture of a model to perform a first task, in which dashed boxes represent optional portions of the method, in accordance with some embodiments of the present disclosure.
FIGS. 4A and 4B collectively illustrate an example schematic of a model, in accordance with some embodiments of the present disclosure.
FIG. 5 illustrates example F1 scores relative to PCA-reduced JS divergence for models, in accordance with an embodiment of the present disclosure.
FIG. 6 illustrates example PCA-reduced dimensionality for each hidden layer in a model, in accordance with an embodiment of the present disclosure.
FIG. 7 illustrates an example schematic of a fully connected neural network, in accordance with some embodiments of the present disclosure.

Like reference numerals refer to corresponding parts throughout the several views of the drawings.

### DETAILED DESCRIPTION

Reference will now be made in detail to embodiments, examples of which are illustrated in the accompanying drawings. In the following detailed description, numerous specific details are set forth in order to provide a thorough understanding of the present disclosure. However, it will be apparent to one of ordinary skill in the art that the present disclosure may be practiced without these specific details. In other instances, well-known methods, procedures, components, circuits, and networks have not been described in detail so as not to unnecessarily obscure aspects of the embodiments.

The present disclosure provides systems and methods for identifying a model to perform a task, such as a classification or prediction task. Each model in a plurality of models is inputted with information for each validation sample in a plurality of validation samples, where label subsets of samples are assigned labels. For each model, an output in the form of a corresponding spectrum is obtained from a layer of the model by applying parameters against the information for each validation sample, thus obtaining a plurality of spectra for the model. The spectra are dimension reduced to obtain component value sets that collectively have an explained variance of at least a threshold amount of the total variance, where the component value sets include a corresponding component value set for each validation sample in the plurality of validation samples. For each model, a divergence is determined using a mathematical combination of a plurality of distances, where each distance represents a label and is between the component value sets for the respective label subset assigned the respective label and (ii) the component value sets for all other samples in the plurality of samples. A model having a divergence satisfying a threshold is identified to perform the task.

Systems and methods for updating the architecture of a model to perform a task are also provided. Each layer in the model comprises a plurality of layers and a set of pretrained weights. The model is inputted with information for each validation sample in a plurality of validation samples, and an output in the form of a corresponding spectrum including a corresponding plurality of values is obtained from each layer, thus obtaining a plurality of spectra for the model having a total variance. In some embodiments, the model was pretrained on a respective task other than the first categorical task. The spectra are dimension reduced to obtain component value sets that collectively have an explained variance of at least a threshold amount of the total variance, where the component value sets include a corresponding component value set for each layer in the plurality of layers. A first layer in the plurality of layers associated with a component value set in the plurality of component value sets having the highest dimensionality is determined, and each layer downstream of the first layer is removed from the model, thereby updating the architecture of the model to perform the task.

As described above, there is a vast number of pretrained and fine-tuned machine learning models available to the public. This availability greatly reduces the amount of time, resources, and data that a research team would need to be successful on a particular task of interest (*e.g*., classification, prediction, *etc.).* However, the performance of pretrained or fine-tuned models can vary greatly depending on the downstream task being performed, and the selection of which pretrained or fine-tuned models should be used for the task can itself require a large amount of time, resources, and data. For this reason, the existence of a heuristic for model selection can save a great amount of time and energy, compared to training several models and choosing the most performant one.

In view of the above, what is needed in the art are improved methods and systems for selecting and optimizing models from a variety of possible pretrained models, particularly for use in natural language processing tasks. The present disclosure addresses these and other problems by comparing label-dependent spectra from the output of pretrained models to identify those pretrained models that are better suited for the downstream task of interest, and by reducing the size and complexity of the pretrained models to those subsets that have greater information capacity. The disclosed systems and methods improve the process of obtaining machine learning models for performing particular tasks by reducing the time, effort, and computational burden of laboriously training and validating multiple models, as well as reducing the complexity of such models using a pruning procedure.

Models that are better fit for the downstream task are generally better at separating data according to the label of each respective datapoint. Ordinarily, this can be seen by examining the label-dependent statistics in the output of the task-dependent output head. When downstream training has not occurred, this can still be observed by examining the label-dependent spectra of the data coming from the output of the pretrained model. In some implementations, the metric for determining the label-dependent spectra separation is the Jensen-Shannon (JS) divergence. Often, the output spectra are multidimensional, so the JS divergence can be calculated and summed along the dimensions of the spectra. However, this can be problematic because high dimensional outputs may have an advantage due to the larger number of dimensions contributing to the sum. In such cases, not only does naïve JS divergence favor higher dimensional outputs, it also does not account for intra-output correlations. To circumvent this issue, in some embodiments, the spectra are decomposed into the principal components necessary to account for a threshold (*e*.*g*., 99%) cumulative explained variance ratio (*e.g*., PCA-reduced JS divergence).

Advantageously, as illustrated in Example 1 below, models (*e*.*g*., pretrained machine learning models) with higher PCA-reduced JS divergence correlate well with better downstream classification performance, indicating that such metrics are predictive of better discrimination of label-dependent data.

Additionally, as illustrated in Example 2 below, models were found to have greater information capacity at intermediate layers. By measuring the dimensionality of the PCA-reduced spectra obtained from the output of each layer in a model, it is possible to limit the complexity of the pretrained model to those subsets that have the greatest discriminative power. This advantageously increases the efficiency of training and using models to perform downstream tasks compared to using the full model, by reducing the time, complexity, and resources needed to train and run the models.

### Definitions.

It will be understood that, although the terms first, second, *etc.* may be used herein to describe various elements, these elements should not be limited by these terms. These terms are only used to distinguish one element from another. For example, a first subject could be termed a second subject, and, similarly, a second subject could be termed a first subject, without departing from the scope of the present disclosure. The first subject and the second subject are both subjects, but they are not the same subject.

The terminology used in the present disclosure is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

As used herein, the term "classification" refers to any number(s) or other characters(s) that are associated with a particular property of a sample or input (*e*.*g*., an electronic health record or a portion thereof). For example, in some embodiments, the term "classification" refers to an association with a respective relationship status in a plurality of relationship statuses (*e*.*g*., positive, negative, or null), such as an association of an electronic health record or portion thereof *(e.g.,* a respective text span in a plurality of text spans) with the respective relationship status. In some embodiments, the term "classification" refers to a relationship status of a subject with a health entity. For instance, in some implementations, a subject is determined to be related (*e*.*g*., positive) or not related (*e*.*g*., negative) to the health entity. The classification can be binary (*e*.*g*., positive or negative) or have more levels of classification (*e*.*g*., a scale from 1 to 10 or 0 to 1). The terms "cutoff" and "threshold" can refer to predetermined numbers used in an operation. For example, a cutoff size can refer to a size above which fragments are excluded. A threshold value can be a value above or below which a particular classification applies. Either of these terms can be used in either of these contexts.

As used interchangeably herein, the term "classifier" or "model" refers to a machine learning model or algorithm.

In some embodiments, a model includes an unsupervised learning algorithm. One example of an unsupervised learning algorithm is cluster analysis. In some embodiments, a model includes supervised machine learning. Nonlimiting examples of supervised learning algorithms include, but are not limited to, logistic regression, neural networks, support vector machines, Naive Bayes algorithms, nearest neighbor algorithms, random forest algorithms, decision tree algorithms, boosted trees algorithms, multinomial logistic regression algorithms, linear models, linear regression, Gradient Boosting, mixture models, hidden Markov models, Gaussian NB algorithms, linear discriminant analysis, or any combinations thereof. In some embodiments, a model is a multinomial classifier algorithm. In some embodiments, a model is a 2-stage stochastic gradient descent (SGD) model. In some embodiments, a model is a deep neural network (*e.g.,* a deep-and-wide sample-level model).

*Neural networks.* In some embodiments, the model is a neural network (*e.g.,* a convolutional neural network and/or a residual neural network). Neural network algorithms, also known as artificial neural networks (ANNs), include convolutional and/or residual neural network algorithms (deep learning algorithms). In some embodiments, neural networks are machine learning algorithms that are trained to map an input dataset to an output dataset, where the neural network includes an interconnected group of nodes organized into multiple layers of nodes. For example, in some embodiments, the neural network architecture includes at least an input layer, one or more hidden layers, and an output layer. In some embodiments, the neural network includes any total number of layers, and any number of hidden layers, where the hidden layers function as trainable feature extractors that allow mapping of a set of input data to an output value or set of output values. In some embodiments, a deep learning algorithm comprises a neural network including a plurality of hidden layers, *e*.*g*., two or more hidden layers. In some instances, each layer of the neural network includes a number of nodes (or "neurons"). In some embodiments, a node receives input that comes either directly from the input data or the output of nodes in previous layers, and performs a specific operation, *e.g.,* a summation operation. In some embodiments, a connection from an input to a node is associated with a parameter (*e*.*g*., a weight and/or weighting factor). In some embodiments, the node sums up the products of all pairs of inputs, xᵢ, and their associated parameters. In some embodiments, the weighted sum is offset with a bias, b. In some embodiments, the output of a node or neuron is gated using a threshold or activation function, f, which, in some instances, is a linear or non-linear function. In some embodiments, the activation function is, for example, a rectified linear unit (ReLU) activation function, a Leaky ReLU activation function, or other function such as a saturating hyperbolic tangent, identity, binary step, logistic, arcTan, softsign, parametric rectified linear unit, exponential linear unit, softPlus, bent identity, softExponential, Sinusoid, Sine, Gaussian, or sigmoid function, or any combination thereof.

In some implementations, the weighting factors, bias values, and threshold values, or other computational parameters of the neural network, are "taught" or "learned" in a training phase using one or more sets of training data. For example, in some implementations, the parameters are trained using the input data from a training dataset and a gradient descent or backward propagation method so that the output value(s) that the ANN computes are consistent with the examples included in the training dataset. In some embodiments, the parameters are obtained from a back propagation neural network training process.

Any of a variety of neural networks are suitable for use in accordance with the present disclosure. Examples include, but are not limited to, feedforward neural networks, radial basis function networks, recurrent neural networks, residual neural networks, convolutional neural networks, residual convolutional neural networks, and the like, or any combination thereof. In some embodiments, the machine learning makes use of a pre-trained and/or transfer-learned ANN or deep learning architecture. In some implementations, convolutional and/or residual neural networks are used, in accordance with the present disclosure.

For instance, a deep neural network model includes an input layer, a plurality of individually parameterized (*e*.*g*., weighted) convolutional layers, and an output scorer. The parameters (*e*.*g*., weights) of each of the convolutional layers as well as the input layer contribute to the plurality of parameters (*e*.*g*., weights) associated with the deep neural network model. In some embodiments, at least 100 parameters, at least 1000 parameters, at least 2000 parameters or at least 5000 parameters are associated with the deep neural network model. As such, deep neural network models require a computer to be used because they cannot be mentally solved. In other words, given an input to the model, the model output needs to be determined using a computer rather than mentally in such embodiments. *See,* for example, Krizhevsky et al., 2012, "Imagenet classification with deep convolutional neural networks," in Advances in Neural Information Processing Systems 2, Pereira, Burges, Bottou, Weinberger, eds., pp. 1097-1105, Curran Associates, Inc.; Zeiler, 2012 "ADADELTA: an adaptive learning rate method," CoRR, vol. abs/1212.5701; and Rumelhart et al., 1988, "Neurocomputing: Foundations of research," ch. Learning Representations by Back-propagating Errors, pp. 696-699, Cambridge, MA, USA: MIT Press, each of which is hereby incorporated by reference.

Neural network algorithms, including convolutional neural network algorithms, suitable for use as models are disclosed in, for example, Vincent et al., 2010, "Stacked denoising autoencoders: Learning useful representations in a deep network with a local denoising criterion," J Mach Learn Res 11, pp. 3371-3408; Larochelle et al., 2009, "Exploring strategies for training deep neural networks," J Mach Learn Res 10, pp. 1-40; and Hassoun, 1995, Fundamentals of Artificial Neural Networks, Massachusetts Institute of Technology, each of which is hereby incorporated by reference. Additional example neural networks suitable for use as models are disclosed in Duda et al., 2001, Pattern Classification, Second Edition, John Wiley & Sons, Inc., New York; and Hastie et al., 2001, The Elements of Statistical Learning, Springer-Verlag, New York, each of which is hereby incorporated by reference in its entirety. Additional example neural networks suitable for use as models are also described in Draghici, 2003, Data Analysis Tools for DNA Microarrays, Chapman & Hall/CRC; and Mount, 2001, Bioinformatics: sequence and genome analysis, Cold Spring Harbor Laboratory Press, Cold Spring Harbor, New York, each of which is hereby incorporated by reference in its entirety.

*Support vector machines.* In some embodiments, the model is a support vector machine (SVM). SVM algorithms suitable for use as models are described in, for example, Cristianini and Shawe-Taylor, 2000, "An Introduction to Support Vector Machines," Cambridge University Press, Cambridge; Boser et al., 1992, "A training algorithm for optimal margin classifiers," in Proceedings of the 5th Annual ACM Workshop on Computational Learning Theory, ACM Press, Pittsburgh, Pa., pp. 142-152; Vapnik, 1998, Statistical Learning Theory, Wiley, New York; Mount, 2001, Bioinformatics: sequence and genome analysis, Cold Spring Harbor Laboratory Press, Cold Spring Harbor, N.Y.; Duda, Pattern Classification, Second Edition, 2001, John Wiley & Sons, Inc., pp. 259, 262-265; and Hastie, 2001, The Elements of Statistical Learning, Springer, New York; and Furey et al., 2000, Bioinformatics 16, 906-914, each of which is hereby incorporated by reference in its entirety. When used for classification, SVMs separate a given set of binary labeled data with a hyper-plane that is maximally distant from the labeled data. For certain cases in which no linear separation is possible, SVMs work in combination with the technique of ' kernels', which automatically realizes a non-linear mapping to a feature space. The hyper-plane found by the SVM in feature space corresponds, in some instances, to a non-linear decision boundary in the input space. In some embodiments, the plurality of parameters (*e*.*g*., weights) associated with the SVM define the hyper-plane. In some embodiments, the hyper-plane is defined by at least 10, at least 20, at least 50, or at least 100 parameters and the SVM model requires a computer to calculate because it cannot be mentally solved.

*Naïve Bayes algorithms.* In some embodiments, the model is a Naive Bayes algorithm. Naive Bayes models suitable for use as models are disclosed, for example, in Ng et al., 2002, "On discriminative vs. generative classifiers: A comparison of logistic regression and naive Bayes," Advances in Neural Information Processing Systems, 14, which is hereby incorporated by reference. A Naive Bayes model is any model in a family of "probabilistic models" based on applying Bayes' theorem with strong (naive) independence assumptions between the features. In some embodiments, they are coupled with Kernel density estimation. *See,* for example, Hastie et al., 2001, The elements of statistical learning: data mining, inference, and prediction, eds. Tibshirani and Friedman, Springer, New York, which is hereby incorporated by reference.

*Nearest neighbor algorithms.* In some embodiments, a model is a nearest neighbor algorithm. In some implementations, nearest neighbor models are memory-based and include no model to be fit. For nearest neighbors, given a query point x₀ (a test subject), the k training points x_{(*r*)}, r, ... , k (here the training subjects) closest in distance to x₀ are identified and then the point x₀ is classified using the k nearest neighbors. In some embodiments, Euclidean distance in feature space is used to determine distance as *d*_{(*i*)} = ||*x*_{(*i*)} - *x*_{(*o*)} ||. Typically, when the nearest neighbor algorithm is used, the abundance data used to compute the linear discriminant is standardized to have mean zero and variance 1. In some embodiments, the nearest neighbor rule is refined to address issues of unequal class priors, differential misclassification costs, and feature selection. Many of these refinements involve some form of weighted voting for the neighbors. For more information on nearest neighbor analysis, *see* Duda, Pattern Classification, Second Edition, 2001, John Wiley & Sons, Inc; and Hastie, 2001, The Elements of Statistical Learning, Springer, New York, each of which is hereby incorporated by reference.

A k-nearest neighbor model is a non-parametric machine learning method in which the input consists of the k closest training examples in feature space. The output is a class membership. An object is classified by a plurality vote of its neighbors, with the object being assigned to the class most common among its k nearest neighbors (k is a positive integer, typically small). If k = 1, then the object is simply assigned to the class of that single nearest neighbor. *See,* Duda et al., 2001, Pattern Classification, Second Edition, John Wiley & Sons, which is hereby incorporated by reference. In some embodiments, the number of distance calculations needed to solve the k-nearest neighbor model is such that a computer is used to solve the model for a given input because it cannot be mentally performed.

*Random forest, decision tree, and boosted tree algorithms.* In some embodiments, the model is a decision tree. Decision trees suitable for use as models are described generally by Duda, 2001, Pattern Classification, John Wiley & Sons, Inc., New York, pp. 395-396, which is hereby incorporated by reference. Tree-based methods partition the feature space into a set of rectangles, and then fit a model (like a constant) in each one. In some embodiments, the decision tree is random forest regression. For example, one specific algorithm is a classification and regression tree (CART). Other specific decision tree algorithms include, but are not limited to, ID3, C4.5, MART, and Random Forests. CART, ID3, and C4.5 are described in Duda, 2001, Pattern Classification, John Wiley & Sons, Inc., New York, pp. 396-408 and pp. 411-412, which is hereby incorporated by reference. CART, MART, and C4.5 are described in Hastie et al., 2001, The Elements of Statistical Learning, Springer-Verlag, New York, Chapter 9, which is hereby incorporated by reference in its entirety. Random Forests are described in Breiman, 1999, "Random Forests--Random Features," Technical Report 567, Statistics Department, U.C. Berkeley, September 1999, which is hereby incorporated by reference in its entirety. In some embodiments, the decision tree model includes at least 10, at least 20, at least 50, or at least 100 parameters (*e*.*g*., weights and/or decisions) and requires a computer to calculate because it cannot be mentally solved.

*Regression.* In some embodiments, the model uses a regression algorithm. In some embodiments, a regression algorithm is any type of regression. For example, in some embodiments, the regression algorithm is logistic regression. In some embodiments, the regression algorithm is logistic regression with lasso, L2 or elastic net regularization. In some embodiments, those extracted features that have a corresponding regression coefficient that fails to satisfy a threshold value are pruned (removed from) consideration. In some embodiments, a generalization of the logistic regression model that handles multi category responses is used as the model. Logistic regression algorithms are disclosed in Agresti, An Introduction to Categorical Data Analysis, 1996, Chapter 5, pp. 103-144, John Wiley & Son, New York, which is hereby incorporated by reference. In some embodiments, the model makes use of a regression model disclosed in Hastie et al., 2001, The Elements of Statistical Learning, Springer-Verlag, New York. In some embodiments, the logistic regression model includes at least 10, at least 20, at least 50, at least 100, or at least 1000 parameters (*e*.*g*., weights) and requires a computer to calculate because it cannot be mentally solved.

*Linear discriminant analysis algorithms.* In some embodiments, linear discriminant analysis (LDA), normal discriminant analysis (NDA), or discriminant function analysis is a generalization of Fisher's linear discriminant, a method used in statistics, pattern recognition, and machine learning to find a linear combination of features that characterizes or separates two or more classes of objects or events. In some embodiments, the resulting combination is used as the model (linear model) in some embodiments of the present disclosure.

*Mixture model and Hidden Markov model.* In some embodiments, the model is a mixture model, such as that described in McLachlan et al., Bioinformatics 18(3):413-422, 2002. In some embodiments, in particular, those embodiments including a temporal component, the model is a hidden Markov model such as described by Schliep et al., 2003, Bioinformatics 19(1):i255-i263.

*Clustering.* In some embodiments, the model is an unsupervised clustering model. In some embodiments, the model is a supervised clustering model. Clustering algorithms suitable for use as models are described, for example, at pages 211-256 of Duda and Hart, Pattern Classification and Scene Analysis, 1973, John Wiley & Sons, Inc., New York, (hereinafter "Duda 1973") which is hereby incorporated by reference in its entirety. As an illustrative example, in some embodiments, the clustering problem is described as one of finding natural groupings in a dataset. To identify natural groupings, two issues are addressed. First, a way to measure similarity (or dissimilarity) between two samples is determined. This metric (*e*.*g*., similarity measure) is used to ensure that the samples in one cluster are more like one another than they are to samples in other clusters. Second, a mechanism for partitioning the data into clusters using the similarity measure is determined. One way to begin a clustering investigation is to define a distance function and to compute the matrix of distances between all pairs of samples in the training set. If distance is a good measure of similarity, then the distance between reference entities in the same cluster is significantly less than the distance between the reference entities in different clusters. However, in some implementations, clustering does not use a distance metric. For example, in some embodiments, a nonmetric similarity function s(x, x') is used to compare two vectors x and x'. In some such embodiments, s(x, x') is a symmetric function whose value is large when x and x' are somehow "similar." Once a method for measuring "similarity" or "dissimilarity" between points in a dataset has been selected, clustering uses a criterion function that measures the clustering quality of any partition of the data. Partitions of the dataset that extremize the criterion function are used to cluster the data. Particular exemplary clustering techniques contemplated for use in the present disclosure include, but are not limited to, hierarchical clustering (agglomerative clustering using a nearest-neighbor algorithm, farthest-neighbor algorithm, the average linkage algorithm, the centroid algorithm, or the sum-of-squares algorithm), k-means clustering, fuzzy k-means clustering algorithm, and Jarvis-Patrick clustering. In some embodiments, the clustering includes unsupervised clustering (*e*.*g*., with no preconceived number of clusters and/or no predetermination of cluster assignments).

*Ensembles of models and boosting.* In some embodiments, an ensemble (two or more) of models is used. In some embodiments, a boosting technique such as AdaBoost is used in conjunction with many other types of learning algorithms to improve the performance of the model. In this approach, the output of any of the models disclosed herein, or their equivalents, is combined into a weighted sum that represents the final output of the boosted model. In some embodiments, the plurality of outputs from the models is combined using any measure of central tendency known in the art, including but not limited to a mean, median, mode, a weighted mean, weighted median, weighted mode, *etc.* In some embodiments, the plurality of outputs is combined using a voting method. In some embodiments, a respective model in the ensemble of models is weighted or unweighted.

As used herein, the term "parameter" refers to any coefficient or, similarly, any value of an internal or external element (*e*.*g*., a weight and/or a hyperparameter) in an algorithm, model, regressor, and/or classifier that can affect (*e*.*g*., modify, tailor, and/or adjust) one or more inputs, outputs, and/or functions in the algorithm, model, regressor and/or classifier. For example, in some embodiments, a parameter refers to any coefficient, weight, and/or hyperparameter that can be used to control, modify, tailor, and/or adjust the behavior, learning, and/or performance of an algorithm, model, regressor, and/or classifier. In some instances, a parameter is used to increase or decrease the influence of an input (*e*.*g*., a feature) to an algorithm, model, regressor, and/or classifier. As a nonlimiting example, in some embodiments, a parameter is used to increase or decrease the influence of a node (*e*.*g*., of a neural network), where the node includes one or more activation functions. Assignment of parameters to specific inputs, outputs, and/or functions is not limited to any one paradigm for a given algorithm, model, regressor, and/or classifier but can be used in any suitable algorithm, model, regressor, and/or classifier architecture for a desired performance. In some embodiments, a parameter has a fixed value. In some embodiments, a value of a parameter is manually and/or automatically adjustable. In some embodiments, a value of a parameter is modified by a validation and/or training process for an algorithm, model, regressor, and/or classifier (*e*.*g*., by error minimization and/or backpropagation methods). In some embodiments, an algorithm, model, regressor, and/or classifier of the present disclosure includes a plurality of parameters. In some embodiments, the plurality of parameters is n parameters, where: n ≥ 2; n ≥ 5; n ≥ 10; n ≥ 25; n ≥ 40; n ≥ 50; n ≥ 75; n ≥ 100; n ≥ 125; n ≥ 150; n ≥ 200; n ≥ 225; n ≥ 250; n ≥ 350; n ≥ 500; n ≥ 600; n ≥ 750; n ≥ 1,000; n ≥ 2,000; n ≥ 4,000; n ≥ 5,000; n ≥ 7,500; n ≥ 10,000; n ≥ 20,000; n ≥ 40,000; n ≥ 75,000; n ≥ 100,000; n ≥ 200,000; n ≥ 500,000, n ≥ 1 x 10⁶, n ≥ 5 x 10⁶, or n ≥ 1 x 10⁷. As such, the algorithms, models, regressors, and/or classifiers of the present disclosure cannot be mentally performed. In some embodiments n is between 10,000 and 1 x 10⁷, between 100,000 and 5 x 10⁶, or between 500,000 and 1 x 10⁶. In some embodiments, the algorithms, models, regressors, and/or classifier of the present disclosure operate in a k-dimensional space, where k is a positive integer of 5 or greater *(e.g.,* 5, 6, 7, 8, 9, 10, *etc.).* As such, the algorithms, models, regressors, and/or classifiers of the present disclosure cannot be mentally performed.

As used herein, the term "untrained model" (*e*.*g*., "untrained classifier" and/or "untrained neural network") refers to a machine learning model or algorithm, such as a classifier or a neural network, that has not been trained on a target dataset. In some embodiments, "training a model" (*e*.*g*., "training a neural network") refers to the process of training an untrained or partially trained model (*e*.*g*., "an untrained or partially trained neural network"). Moreover, it will be appreciated that the term "untrained model" does not exclude the possibility that transfer learning techniques are used in such training of the untrained or partially trained model. For instance, Fernandes et al., 2017, "Transfer Learning with Partial Observability Applied to Cervical Cancer Screening," Pattern Recognition and Image Analysis: 8th Iberian Conference Proceedings, 243-250, which is hereby incorporated by reference, provides non-limiting examples of such transfer learning. In instances where transfer learning is used, the untrained model described above is provided with additional data over and beyond that of the primary training dataset. Typically, this additional data is in the form of parameters (*e.g*., coefficients, weights, and/or hyperparameters) that were learned from another, auxiliary training dataset. Moreover, while a description of a single auxiliary training dataset has been disclosed, it will be appreciated that there is no limit on the number of auxiliary training datasets that can be used to complement the primary training dataset in training the untrained model in the present disclosure. For instance, in some embodiments, two or more auxiliary training datasets, three or more auxiliary training datasets, four or more auxiliary training datasets or five or more auxiliary training datasets are used to complement the primary training dataset through transfer learning, where each such auxiliary dataset is different than the primary training dataset. Any manner of transfer learning is used, in some such embodiments. For instance, consider the case where there is a first auxiliary training dataset and a second auxiliary training dataset in addition to the primary training dataset. In such a case, the parameters learned from the first auxiliary training dataset (by application of a first model to the first auxiliary training dataset) are applied to the second auxiliary training dataset using transfer learning techniques (*e*.*g*., a second model that is the same or different from the first model), which in turn results in a trained intermediate model whose parameters are then applied to the primary training dataset and this, in conjunction with the primary training dataset itself, is applied to the untrained model. Alternatively, in another example embodiment, a first set of parameters learned from the first auxiliary training dataset (by application of a first model to the first auxiliary training dataset) and a second set of parameters learned from the second auxiliary training dataset (by application of a second model that is the same or different from the first model to the second auxiliary training dataset) are each individually applied to a separate instance of the primary training dataset (*e*.*g*., by separate independent matrix multiplications) and both such applications of the parameters to separate instances of the primary training dataset in conjunction with the primary training dataset itself (or some reduced form of the primary training dataset such as principal components or regression coefficients learned from the primary training set) are then applied to the untrained model in order to train the untrained model.

### Example System Embodiments.

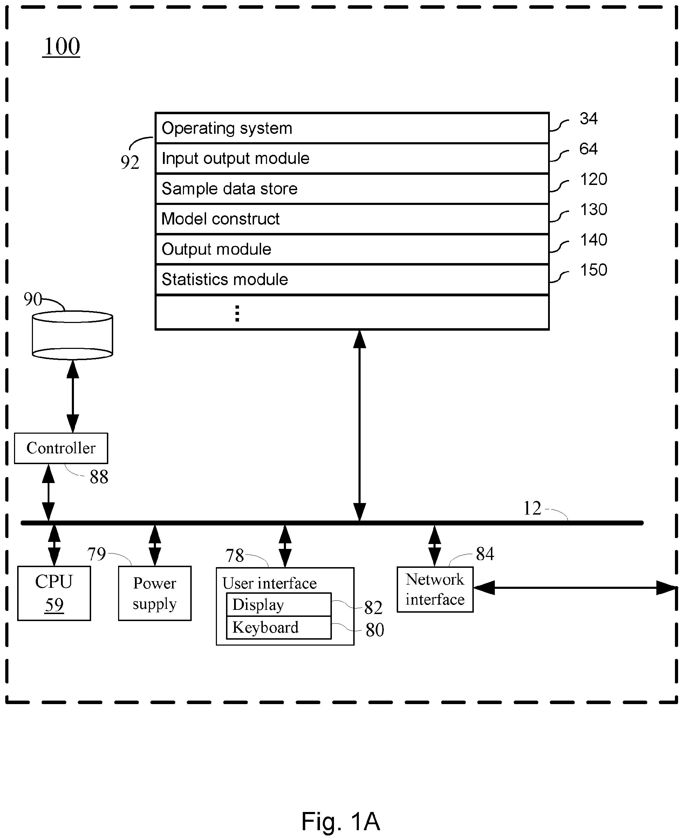

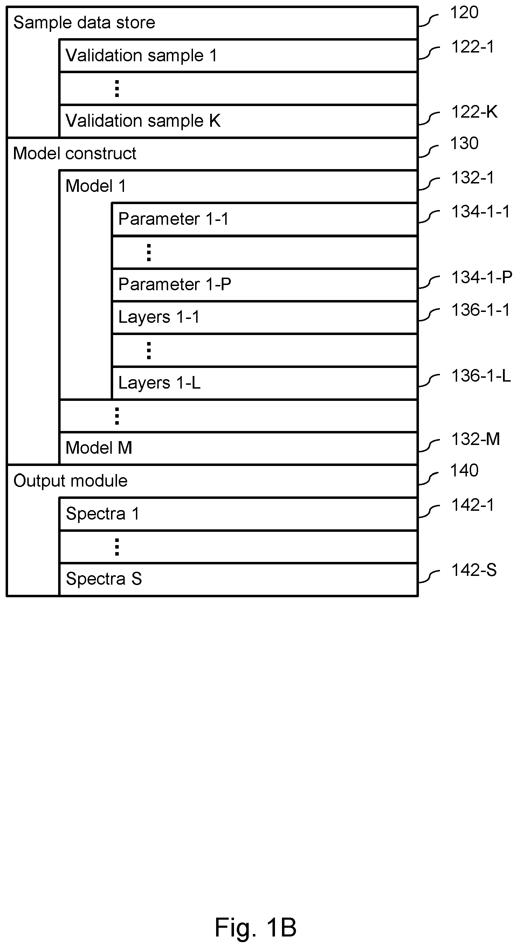

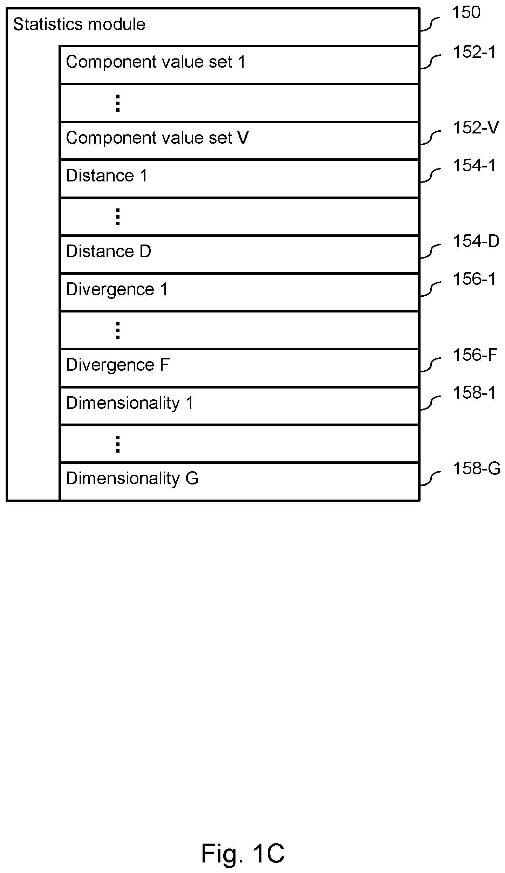

FIGS. 1A-C illustrates a computer system 100 for identifying a model to perform a first categorical task and/or updating the architecture of a model to perform a first categorical task, according to some embodiments of the present disclosure. In typical embodiments, computer system 100 comprises one or more computers. For purposes of illustration in FIGS. 1A-C, the computer system 100 is represented as a single computer that includes all of the functionality of the disclosed computer system 100. However, the present disclosure is not so limited. The functionality of the computer system 100 may be spread across any number of networked computers and/or reside on each of several networked computers and/or virtual machines. One of skill in the art will appreciate that a wide array of different computer topologies are possible for the computer system 100 and all such topologies are within the scope of the present disclosure.

Turning to FIGS. 1A-C with the foregoing in mind, the computer system 100 comprises one or more processing units (CPUs) 59, a network or other communications interface 84, a user interface 78 (*e*.*g*., including an optional display 82 and optional keyboard 80 or other form of input device), a memory 92 (*e*.*g*., random access memory, persistent memory, or combination thereof), one or more magnetic disk storage and/or persistent devices 90 optionally accessed by one or more controllers 88, one or more communication busses 12 for interconnecting the aforementioned components, and a power supply 79 for powering the aforementioned components. To the extent that components of memory 92 are not persistent, data in memory 92 can be seamlessly shared with non-volatile memory 90 or portions of memory 92 that are non-volatile or persistent using known computing techniques such as caching. Memory 92 and/or memory 90 can include mass storage that is remotely located with respect to the central processing unit(s) 59. In other words, some data stored in memory 92 and/or memory 90 may in fact be hosted on computers that are external to computer system 100 but that can be electronically accessed by the computer system 100 over an Internet, intranet, or other form of network or electronic cable using network interface 84. In some embodiments, the computer system 100 makes use of models that are run from the memory associated with one or more graphical processing units in order to improve the speed and performance of the system. In some implementations, the computer system 100 makes use of models that are run from memory 92 rather than memory associated with a graphical processing unit.

In some implementations, the memory 92 of the system 100 stores the following programs, modules and data structures, or a subset thereof, for identifying a model to perform a first categorical task and/or updating the architecture of a model to perform a first categorical task:
- an optional operating system 34 that includes procedures for handling various basic system services;
- an optional input output module 64 for connecting the system 100 with other devices;
- a sample data store 120 that optionally includes a plurality of validation samples 122 (*e.g*., 122-1,... 122-K);
- a model construct 130 that optionally includes, for each respective model 132 in a plurality of models (*e*.*g*., 132-1,... 132-M), a corresponding plurality of parameters 134 (*e.g.,* 134-1-1,... 134-1-P) and a plurality of layers 136 (*e.g.,* 136-1-1,... 136-1-L);
- an output module 140 that optionally includes, for each respective model 132 in the plurality of models, a corresponding plurality of spectra 142 (*e*.*g*., 142-1,... 142-S) having a total variance, obtained from output from the model; and
- a statistics module 150 that optionally includes:
   ∘ a plurality of component value sets 152 (*e*.*g*., 152-1,... 152-V) that collectively have an explained variance of at least a threshold amount of a total variance, based on a dimensionality reduction performed on the plurality of spectra 142,
   ∘ for each respective model 132 in the plurality of models, a corresponding plurality of distances 154 (*e*.*g*., 154-1,... 154-D), where each respective distance in the corresponding plurality of distances represents a respective label in the plurality of labels and is between (i) the component value sets 152 for the respective label subset of validation samples 122 assigned the respective label and (ii) the component value sets for all other samples in the plurality of samples,
   ∘ for each respective model 132 in the plurality of models, a corresponding divergence 156 (*e*.*g*., 156-1,... 156-F) obtained using a mathematical combination of the corresponding plurality of distances 154 for the respective model, and/or
   ∘ a dimensionality 158 (*e*.*g*., 158-1,... 158-G) determined for one or more layers 136 of a respective model 132.

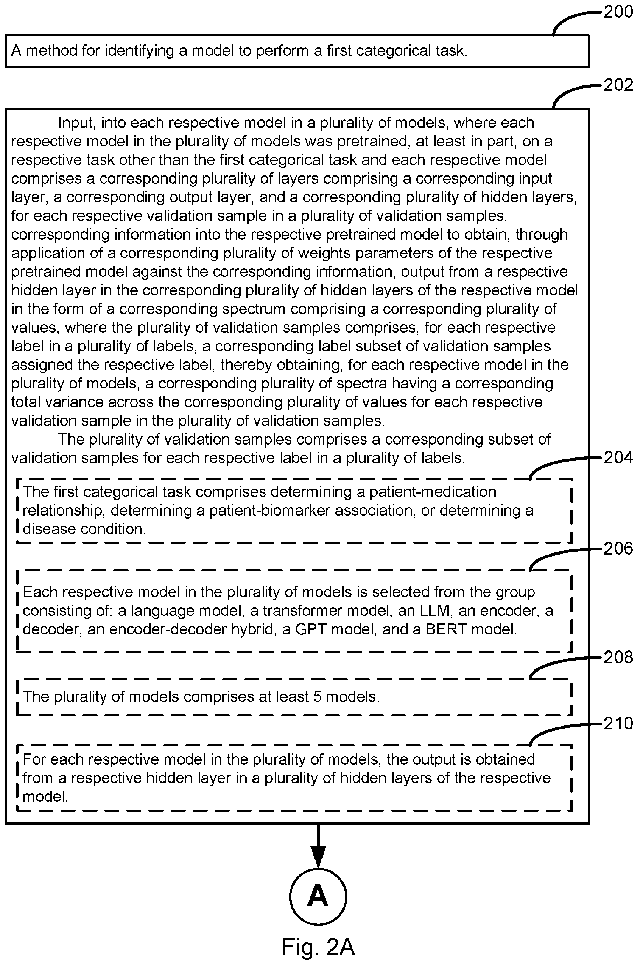

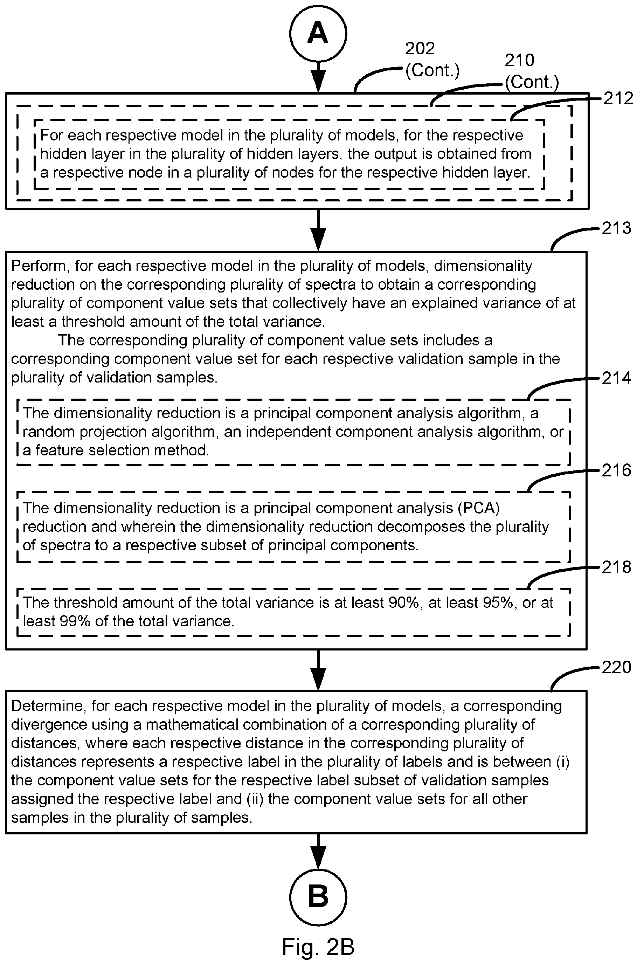

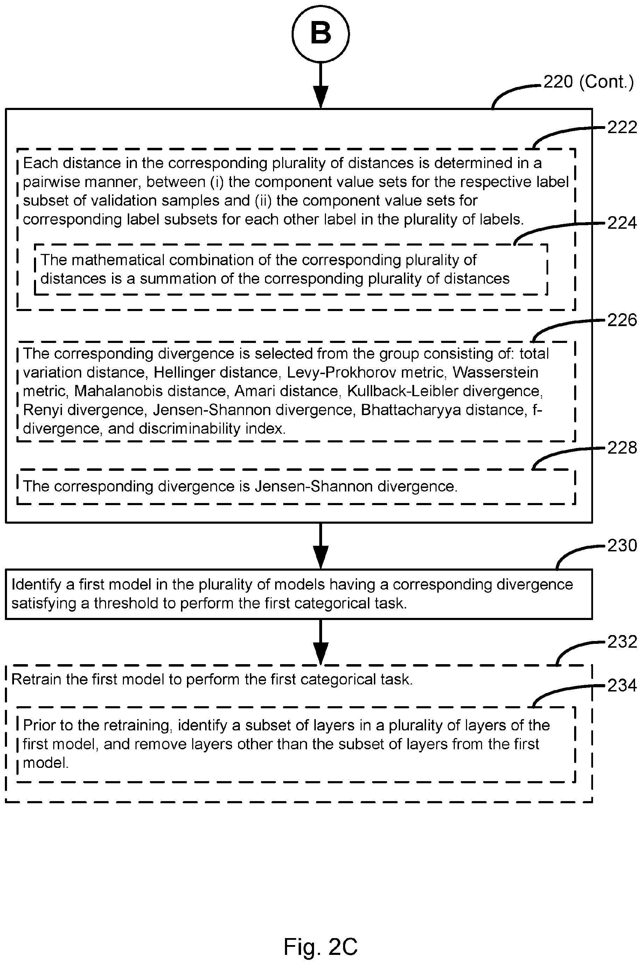

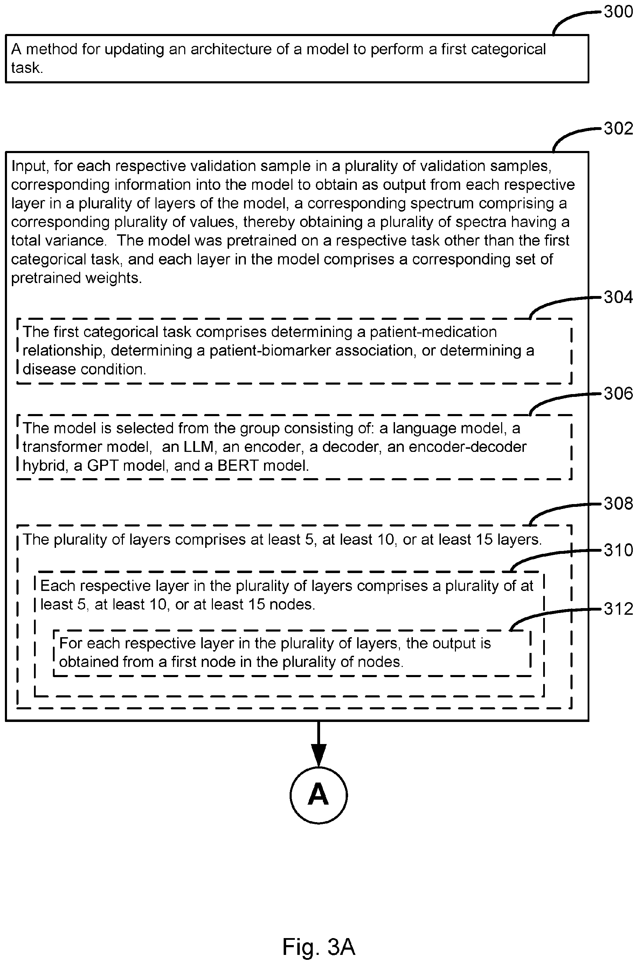

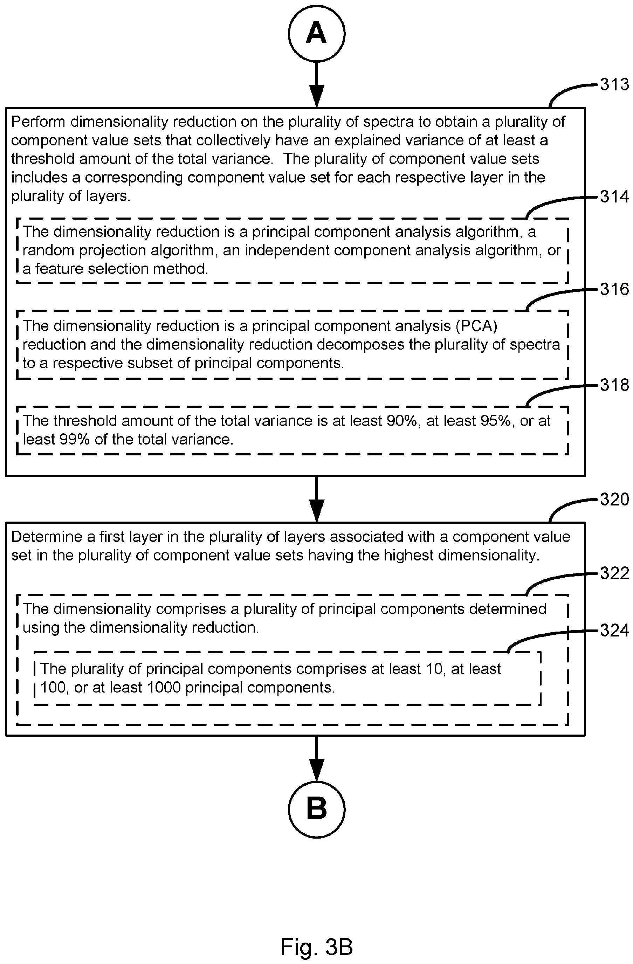

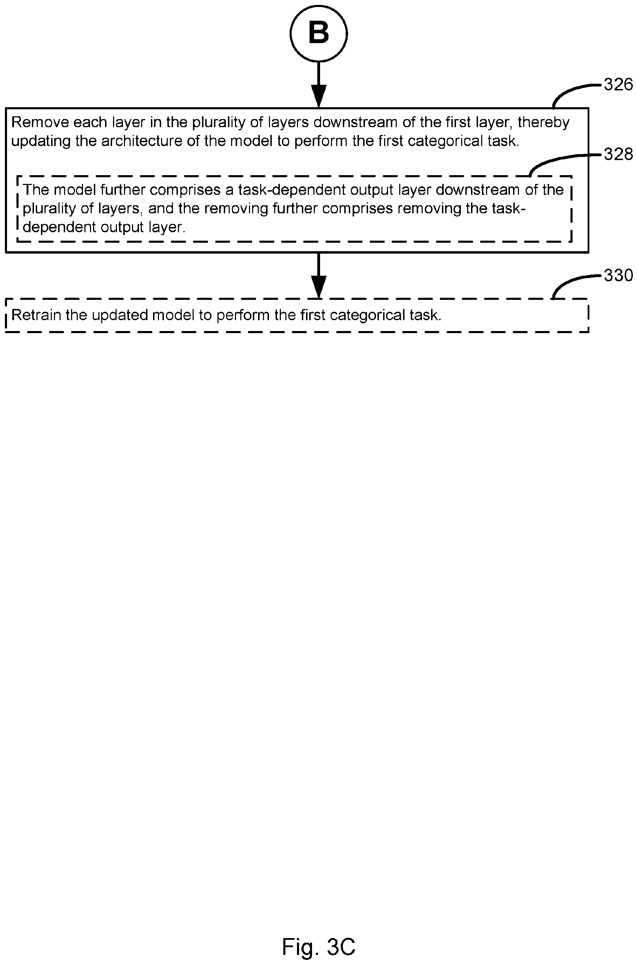

In some implementations, one or more of the above identified data elements or modules of the computer system 100 are stored in one or more of the previously mentioned memory devices, and correspond to a set of instructions for performing a function described above. The above identified data, modules or programs (*e*.*g*., sets of instructions) need not be implemented as separate software programs, procedures or modules, and thus various subsets of these modules may be combined or otherwise re-arranged in various implementations. In some implementations, the memory 92 and/or 90 optionally stores a subset of the modules and data structures identified above. Furthermore, in some embodiments the memory 92 and/or 90 stores additional modules and data structures not described above. Details of the modules and data structures identified above are further described below in reference to FIGS. 2A-C and 3A-C.

### Example Embodiments.

### Example Embodiments for Identifying Models to Perform a Task.

FIGS. 2A-C collectively show a flowchart for an example method 200 for identifying a model 132 to perform a first task (*e*.*g*., a first categorical task), in which dashed boxes represent optional portions of the method, in accordance with some embodiments of the present disclosure. In some embodiments, the method is performed at a computer system that includes one or more processors and memory. In some embodiments, the method is performed by modules of the computer system 100 as detailed elsewhere herein.

Referring to Block 202, in some embodiments, the method includes inputting, into each respective model 132 in a plurality of models, where each respective model in the plurality of models was pretrained, at least in part, on a respective task other than the first categorical task and each respective model comprises a corresponding plurality of layers comprising a corresponding input layer, a corresponding output layer, and a corresponding plurality of hidden layers, for each respective validation sample 122 in a plurality of validation samples, corresponding information into the respective model to obtain, through application of a corresponding plurality of parameters 134 of the respective model against the corresponding information, output from a respective hidden layer 136 in the corresponding plurality of hidden layers in the form of a corresponding spectrum comprising a corresponding plurality of values, where the plurality of validation samples comprises, for each respective label in a plurality of labels, a corresponding label subset of validation samples assigned the respective label, thereby obtaining, for each respective model in the plurality of models, a corresponding plurality of spectra 142 having a corresponding total variance across the corresponding plurality of values for each respective validation sample in the plurality of validation samples. In some embodiments, the plurality of validation samples comprises a corresponding label subset of validation samples for each respective label in a plurality of labels.

### Models.

In some embodiments, the systems and methods of the present disclosure are performed to identify models that are capable of or better suited for performing a particular task (*e*.*g*., a first categorical task) compared to other models. In some implementations, the models are pretrained. In some implementations, the models are pretrained on training data that is specific to the domain of the particular task. In some implementations, the models are pretrained to perform the particular task. In some implementations, the models are pretrained on non-specific training data (*e*.*g*., not specific to the domain of the first categorical task). In some implementations, the models are pretrained to perform a task other than the particular task. In this way, any number of available pretrained models can be evaluated to determine which model is capable of or better suited to perform the particular task, even if the available models have not been trained to perform the particular task. In some embodiments, the task is a categorical task. For example, in some embodiments, the categorical task comprises assigning a category to an input to the model or a sample thereof. In some embodiments, the category is selected from a set of predetermined categories (*e*.*g*., a set of disease types, a set of indications, *etc.).* In some embodiments, the categorical task comprises outputting a prediction for an input to the model, or a sample thereof. In some embodiments, the prediction is selected from a set of possible predictions (*e*.*g*., a set of disease types, an indication in a set of binary indications, *etc.).* In some embodiments, the categorical task comprises outputting a characterization of a respective input to the model, or a sample thereof. In some embodiments, the characterization is selected from a set of candidate characterizations (*e*.*g*., a set of symptoms, a set of disease types, a set of indications, *etc*.).

Referring to Block 204, in some embodiments, the first categorical task comprises determining a patient-medication relationship, determining a patient-biomarker association, or determining a disease condition. In some embodiments, the disease condition is a diagnosis, a prognosis, a symptom, a presence or absence of disease, a disease type (*e*.*g*., oncological disease, cardiovascular disease, endocrinological disease, mental health disease), a disease subtype (*e*.*g*., cancer type, subtype, staging, and/or tissue-of-origin), and/or a probability, severity, or indication thereof.

In some embodiments, the first categorical task comprises determining relationships, predictions, and/or indications in text (*e*.*g*., determining patient-medication relationships in electronic health records or electronic medical records). In some embodiments, the first categorical task comprises determining relationships, predictions, and/or indications in images (*e*.*g*., determining a diagnosis of a disease condition in an image of a subject).

In some embodiments, a respective model in the plurality of models comprises any of the model architectures disclosed herein (*see, e.g.,* the section entitled "Definitions: Models," above). In some embodiments, each respective model in the plurality of models comprises any of the model architectures disclosed herein.

Referring to Block 206, in some embodiments, each respective model in the plurality of models is selected from the group consisting of: a language model, a transformer model, a large language model (LLM), an encoder, a decoder, an encoder-decoder hybrid model, a generative pre-trained transformer (GPT) model, and a Bidirectional Encoder Representations from Transformers (BERT) model. In some embodiments, each respective model in the plurality of models is selected from the group consisting of: BERT, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, T5, and/or any derivative or combination thereof.

In some embodiments, the model is an "encoder-style" LLM or a "decoder-style" LLM. Encoder-style and decoder-style model architectures use self-attention layers to encode inputs, such as word tokens or snippets. While encoders are designed to learn embeddings that can be used for predictive modeling tasks such as classification, decoders are designed to generate new outputs, such as new texts (*e*.*g*., in response to text queries).

In some embodiments, the transformer model utilizes a multi-head self-attention mechanism. Attention is a learned weighted sum of a collection of inputs, where this collection can be of arbitrary size. Suppose a machine learning pipeline includes at some point a 3D tensor of shape (N, sequence_length, dim_size), where for each datapoint, there is a sequence_length collection of vectors, each dim_size in length. These vectors may be anything from token embeddings to hidden states along a recurrent neural network (RNN). The ordering of these vectors is not important, although it is possible to embed that information through positional embeddings. A goal of attention is to encode the original (N, sequence_length, dim_size) shape input into a weighted sum along sequence_length, collapsing it down to (N, dim_size) where each datapoint is represented by a single vector. This output can be useful as an input to another layer or directly as an input to a logistic head.

In some embodiments, rather than taking a naive sum, an attention layer is trained to pay attention to certain inputs when generating this sum. It keys in on the most important inputs and weighs them more heavily. In some implementations, this is done over multiple attention heads - concurrent attention layers reading over the same input - which are then aggregated into a final summarization. A single attention head can be thought of as a retrieval system with a set of keys, queries and values. The attention mechanism learns to map a query (Q) against a set of keys (K) to retrieve the most relevant input values (V). The attention mechanism accomplishes this by calculating a weighted sum where each input is weighed proportional to its perceived importance (i.e., attention weight). This weighting is performed in all attention heads and then further summarized downstream into a single, weighted representation.

In some embodiments, where the attention mechanism is a multi-headed attention mechanism, each snippet or an encoded representation thereof is input into a different attention head. Having multiple heads allows the attention mechanism to have more degrees of freedom in attempting to aggregate information. Each individual head may focus on a different mode when aggregating; across heads, it should converge to the underlying distribution. Thus, multiple heads help in allowing the model to focus on different concepts. Example attention mechanisms are described in Chaudhari et al., July 12, 2021 "An Attentive Survey of Attention Models," arXiv:1904-02874v3, and Vaswani et al., "Attention is All You Need," 31st Conference on Neural Information Processing Systems (NIPS 2017), Long Beach, California, USA, each of which is hereby incorporated by reference. Additional non-limiting models contemplated for use in the present disclosure are described in, for example, Raschka, June 17, 2023, "Understanding Encoder and Decoder LLMs," available on the Internet at magazine.sebastianraschka.com/p/understanding-encoder-and-decoder, which is hereby incorporated herein by reference in its entirety.

Other publicly and/or commercially available models suitable for evaluation using the present systems and methods are contemplated, as will be apparent to one skilled in the art.

In some embodiments, one or more models in the plurality of models are pretrained using a set of nonspecific pretraining samples. As described above, in some implementations, a respective model in the plurality of models is trained on general domain data. In some implementations, the model is trained on data that encompasses a plurality of different domains. In some implementations, the plurality of different domains includes the domain of a particular task of interest (*e*.*g*., the first categorical task). In some implementations, the model is trained on data that does not include data related to the domain of the first task.

In some embodiments, one or more models in the plurality of models are pretrained using a set of domain-specific pretraining samples. In some embodiments, the domain is associated with the first task. In some such implementations, a respective model in the plurality of models is trained on data that is associated with the domain of the first categorical task. For instance, in some implementations, the first task is associated with a biomedical domain (*e*.*g*., determining patient-medication relationships) and the respective model is trained on a corpus of biomedical text (*e*.*g*., BioBERT).

In some embodiments, the domain is not associated with the first task. In some such implementations, a respective model is trained on data that is specific for a domain other than the domain of the first task. As an example, in some implementations, the first task is associated with a biomedical domain (*e*.*g*., determining patient-medication relationships) and a respective model is trained on sentiment (*e*.*g*., determining positive, negative, or neutral connotations in text).

In some embodiments, the domain is a biomedical and/or clinical domain.

In some embodiments, one or more models in the plurality of models are fine-tuned for a task. In some embodiments, one or more models in the plurality of models are fine-tuned for the first task. In some embodiments, the fine-tuning is for a task other than the first task. Fine-tuning generally comprises updating all or a portion of the parameters (*e*.*g*., weights) of a model to modify or update a task performed by the respective model, or to modify or update a domain in which the respective model operates.

In some embodiments, one or more models are pretrained using a different sample type than the sample type of the plurality of validation samples. For example, in some implementations, a respective model is pretrained on images and/or snippets thereof, and the plurality of validation samples comprises text and/or snippets thereof. In some implementations, a respective model is pretrained on text and/or text snippets, and the plurality of validation samples comprises images and/or image snippets. Alternatively or additionally, in some embodiments, one or more models are pretrained using training data of the same type or condition as the plurality of validation samples. For instance, in some implementations, a respective model is pretrained on a corpus of biomedical text, and the plurality of validation samples comprises snippets of text from an electronic health record (EHR) or electronic medical record (EMR).

In some embodiments, the plurality of models further comprises an untrained model (*e*.*g*., BERT Base Untrained).

As noted above, any untrained, partially trained, or pretrained publicly and/or commercially available model is contemplated for evaluation using the present systems and methods, as will be apparent to one skilled in the art.

Referring to Block 208, in some embodiments, the plurality of models comprises at least 5 models.

In some embodiments, the plurality of models comprises at least 2, at least 5, at least 10, at least 20, at least 50, at least 100, at least 500, or at least 1000 models. In some embodiments, the plurality of models comprises no more than 5000, no more than 1000, no more than 500, no more than 100, no more than 50, or no more than 10 models. In some embodiments, the plurality of models consists of from 2 to 20, from 5 to 100, from 50 to 300, from 200 to 1000, or from 800 to 5000 models. In some embodiments, the plurality of models falls within another range starting no lower than 2 models and ending no higher than 5000 models.

In some embodiments, a respective model in the plurality of models comprises a corresponding plurality of parameters. Parameters suitable for use in the present disclosure are further described elsewhere herein (*see*, *e.g*., the section entitled "Definitions: Parameters," above). In some embodiments, the corresponding plurality of parameters comprises the plurality of weights for the respective model.

In some embodiments, the plurality of parameters includes at least 10, at least 50, at least 100, at least 500, at least 1000, at least 2000, at least 5000, at least 10,000, at least 20,000, at least 50,000, at least 100,000, at least 200,000, at least 500,000, at least 1 million, at least 2 million, at least 3 million, at least 4 million, at least 5 million, at least 10 million, at least 100 million, at least 1 billion, at least 10 billion, at least 100 billion, or at least 1 trillion parameters. In some embodiments, the plurality of parameters includes no more than 10 trillion, no more than 1 trillion, no more than 1 billion, no more than 100 million, no more than 10 million, no more than 5 million, no more than 4 million, no more than 1 million, no more than 500,000, no more than 100,000, no more than 50,000, no more than 10,000, no more than 5000, no more than 1000, or no more than 500 parameters. In some embodiments, the plurality of parameters consists of from 10 to 5000, from 500 to 10,000, from 10,000 to 500,000, from 20,000 to 1 million, from 1 million to 1 billion, from 1 billion to 100 billion, or from 10 billion to 10 trillion parameters. In some embodiments, the plurality of parameters falls within another range starting no lower than 10 parameters and ending no higher than 10 trillion parameters.

In some embodiments, for a respective model in the plurality of models, the corresponding plurality of weights comprises at least 1000 weights.

In some embodiments, the plurality of weights includes at least 10, at least 50, at least 100, at least 500, at least 1000, at least 2000, at least 5000, at least 10,000, at least 20,000, at least 50,000, at least 100,000, at least 200,000, at least 500,000, at least 1 million, at least 2 million, at least 3 million, at least 4 million, at least 5 million, at least 10 million, at least 100 million, at least 1 billion, at least 10 billion, at least 100 billion, or at least 1 trillion weights. In some embodiments, the plurality of weights includes no more than 10 trillion, no more than 1 trillion, no more than 1 billion, no more than 100 million, no more than 10 million, no more than 5 million, no more than 4 million, no more than 1 million, no more than 500,000, no more than 100,000, no more than 50,000, no more than 10,000, no more than 5000, no more than 1000, or no more than 500 weights. In some embodiments, the plurality of weights consists of from 10 to 5000, from 500 to 10,000, from 10,000 to 500,000, from 20,000 to 1 million, from 1 million to 1 billion, from 1 billion to 100 billion, or from 10 billion to 10 trillion weights. In some embodiments, the plurality of weights falls within another range starting no lower than 10 weights and ending no higher than 10 trillion weights.

### Validation Samples.

In some embodiments, each respective validation sample in the plurality of validation samples comprises all or a portion of an electronic health record (EHR) or electronic medical record (EMR).

Electronic health records (EHR) or hand-written records which are later digitized to generate an electronic medical record (EMR) contain patient records, including interactions between a patient and a healthcare provider. In some implementations, EHRs and EMRs are stored in electronic medical systems curated for the healthcare provider. These EHRs and EMRs typically have structured data, including medical codes used by the healthcare provider for billing purposes, and unrestructured data, including clinical notes and observations made by physicians, physician assistants, nurses, and others while attending to the patient. EHRs and EMRs hold a tremendous amount of clinical data that, in theory, can be leveraged to the great benefit of public health. Advantageously, such wealth of clinical data can be used to generate models for predicting disease risk, predicting treatment outcomes, recommending personalized therapies, predicting disease-free survival following treatment, predicting disease recurrence, and the like. In some embodiments, the plurality of validation samples includes clinical notes.

In some embodiments, each respective validation sample in the plurality of validation samples comprises an EHR or an EMR in its entirety. In some embodiments, each respective validation sample in the plurality of validation samples comprises a portion of an EHR or an EMR.

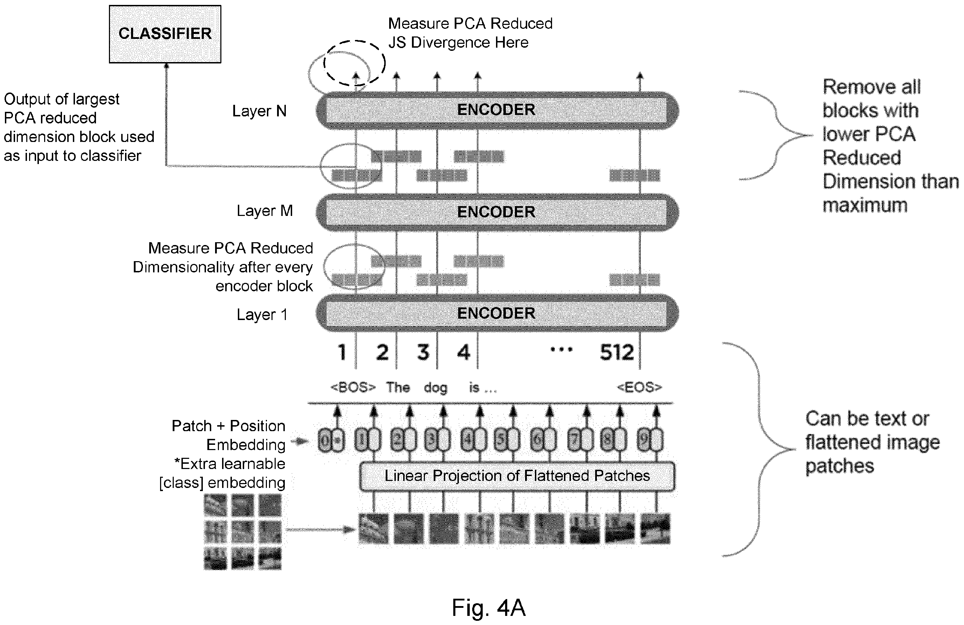

Other sample types are contemplated for use in the present disclosure as appropriate for the particular task, as will be apparent to one skilled in the art. In some implementations, the plurality of validation samples comprises text. In some implementations, the plurality of validation samples comprises images. In some implementations, a respective validation sample in the plurality of validation samples is in the form of a tensor or other representation. In some implementations, a respective validation sample in the plurality of validation samples is embedded, encoded, scaled, and/or transformed prior to inputting into the model. In some embodiments, a respective validation sample in the plurality of validation samples is segmented or partitioned (*e*.*g*., into patches). Segmenting inputs is further described below. For instance, as illustrated in FIG. 4A, an input to the model can be obtained from text or images, where the text and/or images are flattened, partitioned into patches, and embedded prior to inputting into the model.

In some embodiments, the corresponding information for each respective validation sample in the plurality of validation samples comprises one or more corresponding snippets.

For instance, in some implementations, an input is too large to feed into a model as an input. Accordingly, in some embodiments, the method further includes segmenting or splitting the input into a plurality of snippets, where each respective snippet corresponds to a portion of the input (e.g., short snippets of text and/or patches of images). In some implementations, the snippets are equal or about equal in size, shape, and/or length. In some implementations, a first snippet and a second snippet in the plurality of snippets have different sizes, shapes, and/or lengths. In some embodiments, one or more snippets are ranked, padded, and/or trimmed (*e*.*g*., ranking text according to a number of medically-relevant words in each snippet). In some embodiments, the plurality of snippets per input is limited to a corresponding number of snippets and/or portion of input per snippet (*e*.*g*., a maximum size of 512 snippets of 256 words, totaling 131,072 words).

In some embodiments, each snippet is a portion, less than a whole, of a document or image. In some embodiments, each snippet is a portion surrounding an instance of a criterion or a corresponding surface form (*e*.*g*., a predefined number of words or characters before and/or after the instance of the criterion or the corresponding surface form). For example, if a criterion includes the term "PARP inhibitor," and a respective document includes the sentence "PARP inhibitors may be used in the treatment of breast cancer and ovarian cancer," the system will extract 100 words before and after the term "PARP inhibitor" to produce a single snippet.

In some embodiments, regular expression filtering is used to split raw text to obtain snippets. An example of regular expression syntax that can be used to split raw text into sentences is "r'\s{2,}|(?<!\w\.\w.)(?<![A-Z][a-z]\.)(?<=\.|\?)\s'." In some embodiments, particular punctuation marks are excluded from being identified as snippet boundaries. For example, the period at the end of the abbreviation 'Dr.' for doctor can be excluded (*e*.*g*., "dr. XX"). Examples of regular expression syntax useful for excluding identification of particular punctuation as snippet boundaries is found, for example, in Section 3.2.2. of Rokach et al., Information Retrieval Journal, 11(6):499-538 (2008), the content of which is incorporated herein by reference, in its entirety, for all purposes. In some embodiments, a machine learning model is used to split an input into snippets. Natural language processing (NLP) libraries for generating snippets (*e*.*g*., sentences) are known in the art, including Google SyntaxNet, Stanford CoreNLP, NLTK Phyton library, and spaCy, as described in Haris et al., Journal of Information Technology and Computer Science, 5(3):279-92, which is hereby incorporated herein by reference in its entirety for all purposes.

In some embodiments, the plurality of validation samples collectively represents a plurality of labels. In some such embodiments, each respective validation sample in the plurality of validation samples comprises a respective label. In some embodiments, the plurality of validation samples comprises a corresponding label subset of validation samples for each respective label in a plurality of labels.

For instance, in some embodiments, each validation sample in the plurality of validation samples comprises a label indicating a presence or absence of a disease condition. Thus, in some such embodiments, a first label subset of validation samples in the plurality of validation samples comprises those validation samples labeled "present," and a second label subset of validation samples in the plurality of validation samples comprises those validation samples labeled "absent."

In some implementations, labels for validation samples are task-dependent, as will be apparent to one skilled in the art. For instance, where the first categorical task is to identify patient-medication relationships, the plurality of labels comprises, for each respective validation sample in the plurality of validation samples, a corresponding label that indicates an association between the respective sample and a patient-medication relationship. In some implementations, where the first categorical task is to determine a disease condition, the plurality of labels comprises, for each respective validation sample in the plurality of validation samples, a corresponding label that indicates a presence (*e*.*g*., "positive") or absence (*e*.*g*., "negative") of the disease condition. In some embodiments, where the first categorical task is a classification task, the plurality of labels comprises one or more classes (*e*.*g*., for skin lesion classifications, as described below in Example 2, the plurality of labels includes actinic keratoses, benign keratosis-like lesions, basal cell carcinoma, dermatofibroma, vascular lesions, melanoma, and/or melanocytic nevi).

In some embodiments, the plurality of labels comprises at least 2, at least 3, at least 5, at least 10, at least 50, at least 100, at least 200, or at least 300 labels. In some embodiments, the plurality of labels comprises no more than 500, no more than 300, no more than 100, no more than 50, or no more than 10 labels. In some embodiments, the plurality of labels consists of from 2 to 10, from 5 to 30, from 20 to 100, from 80 to 300, or from 200 to 500 labels. In some embodiments, the plurality of labels falls within another range starting no lower than 2 labels and ending no higher than 500 labels.

In some embodiments, the plurality of validation samples comprises at least 100 validation samples.

In some embodiments, the plurality of validation samples comprises at least 10, at least 50, at least 100, at least 500, at least 1000, at least 2000, at least 5000, at least 10,000, at least 20,000, at least 50,000, at least 100,000, at least 200,000, at least 500,000, at least 1 million, at least 2 million, at least 3 million, at least 4 million, or at least 5 million validation samples. In some embodiments, the plurality of validation samples includes no more than 10 million, no more than 5 million, no more than 4 million, no more than 1 million, no more than 500,000, no more than 100,000, no more than 50,000, no more than 10,000, no more than 5000, no more than 1000, or no more than 100 validation samples. In some embodiments, the plurality of validation samples consists of from 10 to 5000, from 500 to 10,000, from 10,000 to 500,000, from 20,000 to 1 million, from 1 million to 5 million, or from 2 million to 10 million validation samples. In some embodiments, the plurality of validation samples falls within another range starting no lower than 10 validation samples and ending no higher than 10 million validation samples.

### Obtaining Outputs.

Referring to Block 210, in some embodiments, for each respective model in the plurality of models, the output is obtained from a respective hidden layer in a plurality of hidden layers of the respective model.

Hidden layers and nodes (*e*.*g*., neurons) suitable for use in the present disclosure are described in further detail elsewhere herein *(see,* for example, the section entitled "Definitions: Neural Networks," above). In some embodiments, each respective model comprises a plurality of hidden layers and an output layer *(e.g.,* a classifier layer) that takes, as input, an output of a final hidden layer and generates a task-dependent output *(e.g.,* a classification). For instance, FIGS. 4A-B illustrate example schematics of a model comprising a plurality of hidden layers followed by an output layer (e*.g*., classifier), where each respective hidden layer comprises a plurality of nodes.

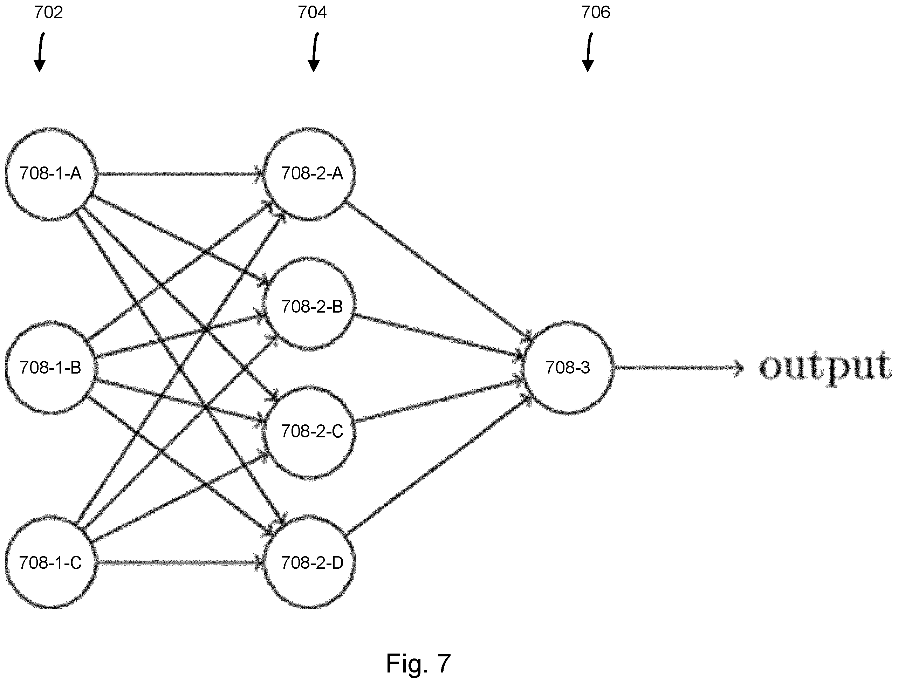

As described above, in some embodiments, the model includes an interconnected group of nodes organized into multiple "layers" of nodes. For example, FIG. 7 illustrates an example schematic of a fully connected neural network in which the model includes at least an input layer 702, one or more hidden layers 704, and an output layer 706, where hidden layers refer to the layers between the input and output layers. In some embodiments, the model includes any total number of layers, and any number of hidden layers, where the hidden layers function as trainable feature extractors that allow mapping of a set of input data to an output value or set of output values. In some instances, each layer of the neural network includes a number of nodes (or "neurons"). In some embodiments, a node receives input that comes either directly from the input data or the output of nodes in previous layers, and performs a specific operation, *e.g.,* a summation operation. For example, referring to the example model in FIG. 7, each respective layer (*e*.*g*., layers 702, 704, or 706) comprises one or more nodes 708 *(e.g.,* 708-1-A, 708-1-B, 708-1-C, 708-2-A, 708-2-B, 708-2-C, 708-2-D, 708-3). Nodes within the hidden layer 704 may be referred to as hidden nodes or hidden neurons. In some embodiments, a connection from an input to a node is associated with a parameter (*e*.*g*., a weight and/or weighting factor). In some embodiments, the node sums up the products of all pairs of inputs, xᵢ, and their associated parameters. In the fully connected neural network depicted in FIG. 7, all possible connections between two layers are present such that every input of a previous layer influences every output of a subsequent layer. Each input of the previous layer to a particular node is weighted according to the parameters associated with that node; thus, at node 708-2-A, the weights of this node only affect the output generated for this node and do not influence the outputs for nodes 708-2-B or 708-2-C.

In some embodiments, the inputs to the model and/or to each respective node thereof are in the form of embeddings. Generally, embeddings refer to a representation (*e*.*g*., in tensor form) of an object, such as a sequence (*e*.*g*., of text, snippets, images, and/or patches). In some embodiments, embeddings are obtained by mapping a discrete or categorical variable to a vector of continuous values. In some implementations, embeddings capture semantic relationships or context between elements of the representation (*e*.*g*., snippets in a sequence of text or between patches of images). FIG. 4A, for example, illustrates an input where the identity and position of each patch in a plurality of image patches is embedded as a tensor of values. Embeddings may also be used to represent semantic context in textual inputs such as "beginning of sentence," "end of sentence," and various text snippets *(e.g.,* "the," "dog," "is," *etc.).* Methods, models, and algorithms for embedding suitable for use in the present disclosure are known in the art, including but not limited to such examples as principal component analysis (PCA), singular value decomposition (SVD), Word2Vec, Sequence2Vec, Gene2Vec, kmer2vec, seq2seq, and/or BERT. *See,* for example, Mokhtarani, "Embeddings in Machine Learning: Everything You Need to Know," 2021, available on the Internet at featureform.com/post/the-definitive-guide-to-embeddings.

In some embodiments, the output in the form of a spectrum comprises a plurality of values. In some embodiments, each value in the plurality of values is a corresponding embedding. For instance, as described above, in some embodiments, the model outputs, from one or more output nodes in the output layer and/or from one or more hidden nodes in a respective hidden layer, a plurality of values that is generated by performing an operation on input data to the one or more output nodes or hidden nodes. In other words, in some implementations, a spectrum is a collection of embedded values that are output from the nodes in a particular layer of the model. In some embodiments, the output in the form of a spectrum comprises a plurality of values in tensor or vector format.

In some embodiments, the plurality of values comprises at least at least 2, at least 5, at least 10, at least 20, at least 50, at least 100, at least 500, at least 1000, at least 10,000, or at least 100,000 values. In some embodiments, the plurality of values comprises no more than 1 million, no more than 100,000, no more than 10,000, no more than 1000, no more than 500, no more than 100, no more than 50, or no more than 10 values. In some embodiments, the plurality of values consists of from 2 to 20, from 5 to 100, from 50 to 300, from 200 to 500, from 300 to 1000, from 1000 to 10,000, or from 10,000 to 1 million values. In some embodiments, the plurality of values falls within another range starting no lower than 2 values and ending no higher than 1 million values.

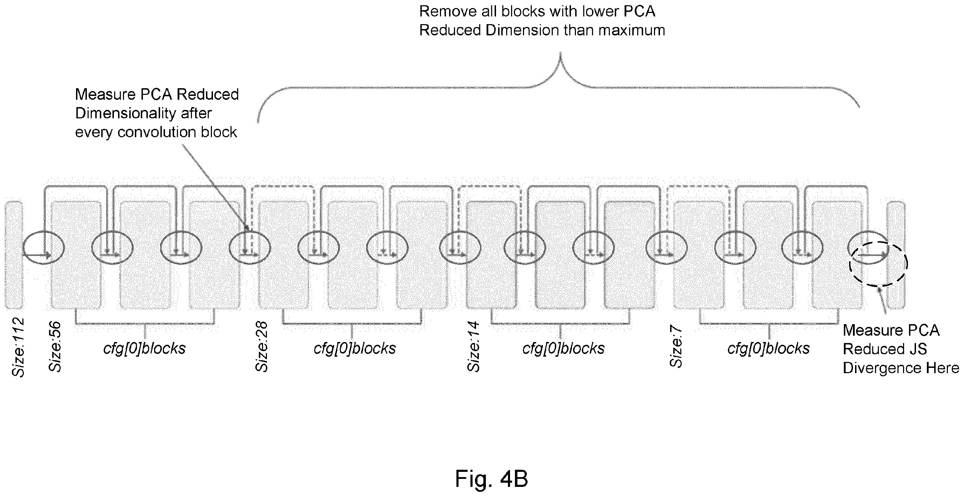

Referring again to Block 202, in some embodiments, the output in the form of a spectrum is obtained from the last hidden layer in the plurality of layers. For example, FIG. 4A illustrates a measurement obtained at the last hidden layer in a plurality of N layers (e.g., prior to the classifier or "head" layer) (indicated by dashed circle). Similarly, FIG. 4B illustrates a measurement obtained using output from the last hidden layer in a plurality of hidden layers, prior to a classifier layer (measurement indicated by dashed circle). In some embodiments, the output is obtained from any hidden layer in the plurality of layers. In some embodiments, the output is obtained from the same hidden layer for each respective model in the plurality of models (*e*.*g*., the first hidden layer of each model, the second hidden layer of each model, the second-to-last hidden layer of each model, the last hidden layer of each model, *etc.).* In some embodiments, for a first model in the plurality of models, the output is obtained from a different hidden layer relative to a second model in the plurality of models (*e*.*g*., the last hidden layer for a first model and the penultimate hidden layer for a second model).

In some embodiments, a respective model in the plurality of models comprises at least 2, at least 5, at least 10, at least 20, at least 50, at least 100, or at least 500 layers. In some embodiments, the plurality of hidden layers comprises no more than 1000, no more than 500, no more than 100, no more than 50, or no more than 10 layers. In some embodiments, the plurality of hidden layers consists of from 2 to 20, from 5 to 100, from 50 to 300, from 200 to 500, or from 300 to 1000 layers. In some embodiments, the plurality of hidden layers falls within another range starting no lower than 2 layers and ending no higher than 1000 layers.

Referring to Block 212, in some embodiments, for each respective model in the plurality of models, for the respective hidden layer in the plurality of hidden layers, the output is obtained from a respective node in a plurality of nodes for the respective hidden layer. In some embodiments, each respective hidden layer in the plurality of hidden layers comprises a plurality of nodes. In some embodiments, the output is obtained from any node in the plurality of nodes. In some embodiments, the output is obtained from the same node for each respective model in the plurality of models *(e.g.,* the first node of the selected layer of each model, the second node of the selected layer of each model, the second-to-last node of the selected layer of each model, the last node of the selected layer of each model, *etc.).* In some embodiments, for a first model in the plurality of models, the output is obtained from a different node of a selected hidden layer relative to a second model in the plurality of models (*e*.*g*., the last node of the selected layer for a first model and the penultimate node of the selected layer for a second model).

In some embodiments, a respective hidden layer in a plurality of hidden layers comprises at least 2, at least 5, at least 10, at least 20, at least 50, at least 100, at least 500, at least 1000, at least 10,000, or at least 100,000 nodes. In some embodiments, the plurality of nodes in a respective hidden layer comprises no more than 1 million, no more than 100,000, no more than 10,000, no more than 1000, no more than 500, no more than 100, no more than 50, or no more than 10 nodes. In some embodiments, the plurality of nodes in a respective hidden layer consists of from 2 to 20, from 5 to 100, from 50 to 300, from 200 to 500, from 300 to 1000, from 1000 to 10,000, or from 10,000 to 1 million nodes. In some embodiments, the plurality of nodes in a respective hidden layer falls within another range starting no lower than 2 nodes and ending no higher than 1 million nodes.

In some embodiments, for each respective validation sample in the plurality of validation samples, the corresponding spectrum comprises a plurality of dimensions (*e*.*g*., the spectrum is multidimensional).

In some embodiments, for a respective validation sample in the plurality of validation samples, the corresponding spectrum comprises at least 2, at least 5, at least 10, at least 20, at least 50, at least 100, at least 500, at least 1000, or at least 5000 dimensions. In some embodiments, the corresponding spectrum comprises no more than 10,000, no more than 5000, no more than 1000, no more than 500, no more than 100, no more than 20, or no more than 10 dimensions. In some embodiments, the corresponding spectrum consists of from 2 to 20, from 10 to 100, from 80 to 500, from 300 to 2000, or from 1000 to 10,000 dimensions. In some embodiments, the corresponding spectrum falls within another range starting no lower than 2 dimensions and ending no higher than 10,000 dimensions.

In some embodiments, the corresponding spectrum comprises a plurality of dimensions, where each respective label in the plurality of labels is represented by a respective dimension in the plurality of dimensions.

In some embodiments, the corresponding spectrum comprises, for each respective validation sample in the plurality of validation samples, a corresponding distribution of probabilities for the respective validation sample across the plurality of labels. For instance, for a respective text snippet in a plurality of text snippets, an output from the model can include an indication or probability that the text snippet does or does not contain a patient-medication relationship. In some embodiments, the indication is a distribution of probabilities assigned to the respective text snippet encompassing the probability that the text snippet does contain the patient-medication relationship and the probability that the text snippet does not contain the patient-medication relationship.

In some embodiments, a respective dimension in the plurality of dimensions does not represent a label in the plurality of labels.

### Dimensionality Reduction.

Referring to Block 213, in some embodiments, the method further includes performing, for each respective model 132 in the plurality of models, dimensionality reduction on the corresponding plurality of spectra 142 to obtain a corresponding plurality of component value sets 152 that have an explained variance of at least a threshold amount of the total variance. In some embodiments, the corresponding plurality of component value sets 152 includes a corresponding component value set for each respective validation sample 122 in the plurality of validation samples.

In some embodiments, any one or more of a variety of dimensionality reduction techniques is used. Examples include, but are not limited to, principal component analysis (PCA), non-negative matrix factorization (NMF), linear discriminant analysis (LDA), diffusion maps, or network (*e*.*g*., neural network) techniques such as an autoencoder.

Referring to Block 214, in some embodiments, the dimensionality reduction is a principal component analysis algorithm, a random projection algorithm, an independent component analysis algorithm, or a feature selection method.

In some embodiments, the dimension reduction is a principal components algorithm, a random projection algorithm, an independent component analysis algorithm, a feature selection method, a factor analysis algorithm, Sammon mapping, curvilinear components analysis, a stochastic neighbor embedding (SNE) algorithm, an Isomap algorithm, a maximum variance unfolding algorithm, a locally linear embedding algorithm, a t-SNE algorithm, a non-negative matrix factorization algorithm, a kernel principal component analysis algorithm, a graph-based kernel principal component analysis algorithm, a linear discriminant analysis algorithm, a generalized discriminant analysis algorithm, a uniform manifold approximation and projection (UMAP) algorithm, a LargeVis algorithm, a Laplacian Eigenmap algorithm, or a Fisher's linear discriminant analysis algorithm. *See,* for example, Fodor, 2002, "A survey of dimension reduction techniques," Center for Applied Scientific Computing, Lawrence Livermore National, Technical Report UCRL-ID-148494; Cunningham, 2007, "Dimension Reduction," University College Dublin, Technical Report UCD-CSI-2007-7, Zahorian et al., 2011, "Nonlinear Dimensionality Reduction Methods for Use with Automatic Speech Recognition," Speech Technologies. doi: 10.5772/16863. ISBN 978-953-307-996-7; and Lakshmi et al., 2016, "2016 IEEE 6th International Conference on Advanced Computing (IACC)," pp. 31-34. doi:10.1109/IACC.2016.16, ISBN 978-1-4673-8286-1, the contents of which are hereby incorporated by reference, in their entireties, for all purposes.

Referring to Block 216, in some embodiments, the dimensionality reduction is a principal component analysis (PCA) reduction and the dimensionality reduction decomposes the plurality of spectra to a respective subset of principal components.

In such embodiments, the number of principal components in the subset of principal components can be limited to a number that explains a threshold amount of variance in the data to which the dimensionality reduction is applied (*e.g*., the threshold amount of the total variance for the output spectra corresponding to the plurality of validation samples).

Generally, different models and/or different sets of validation samples can produce outputs with different dimensionality. This can be problematic because higher dimensional outputs have been observed to have an advantage when evaluating the ability of a model to perform label-dependent separation of samples (*e*.*g*., when calculating a distance between principal components that explain variance in the validation set). This may be due to a larger number of dimensions contributing to the sum. Not only do naïve divergence measures (such as Jensen-Shannon (JS) divergence) favor higher dimensional outputs, they also do not account for intra-output correlations. This presents further problems as output spectra can be heavily correlated along the last dimensions. Accordingly, and without being limited to any one theory of operation, by limiting the dimensionality of the output spectra to explain a threshold proportion of the variance in the data, it is possible to remove linear dependencies in the data that may unfairly skew divergence measures in favor of higher dimensional outputs.

Referring to Block 218, in some embodiments, the threshold amount of the total variance is at least 90%, at least 95%, or at least 99% of the total variance. In some embodiments, the threshold amount of the total variance is at least 70%, at least 80%, at least 85%, at least 90%, at least 95%, at least 98%, at least 99%, or 100% of the total variance. In some embodiments, the threshold amount of the total variance is no more than 99%, no more than 98%, no more than 95%, no more than 90%, no more than 85%, or no more than 80% of the total variance. In some embodiments, the threshold amount of the total variance is from 70% to 80%, from 80% to 90%, from 85% to 95%, from 90% to 99%, or from 95% to 100% of the total variance. In some embodiments, the threshold amount of the total variance falls within another range starting no lower than 70% and ending no higher than 100%.

In some embodiments, each respective component value set in the plurality of component value sets corresponds to a respective validation sample in the plurality of validation samples and represents a dimension-reduced output for the respective validation sample. For instance, consider the case where the plurality of spectra obtained from the respective model is a tensor of shape (N, D), where N is the number of validation samples in the validation set, and D is the dimensionality of the output. The dimension reduction then yields a new tensor of shape (N, D_pca), where N is the number of validation samples in the validation set, and D_pca is the reduced dimensionality of the output. The plurality of component value sets thus represents the decomposed model output (*e*.*g*., PCA-reduced) for the plurality of validation samples.

In some embodiments, each respective principal component in the subset of principal components comprises, for each respective validation sample in the plurality of validation samples, a respective component value in the corresponding component value set for the respective validation sample.

In some embodiments, the plurality of component value sets comprises at least 100 component value sets.

In some embodiments, the plurality of component value sets comprises at least 10, at least 50, at least 100, at least 500, at least 1000, at least 2000, at least 5000, at least 10,000, at least 20,000, at least 50,000, at least 100,000, at least 200,000, at least 500,000, at least 1 million, at least 2 million, at least 3 million, at least 4 million, or at least 5 million component value sets. In some embodiments, the plurality of component value sets includes no more than 10 million, no more than 5 million, no more than 4 million, no more than 1 million, no more than 500,000, no more than 100,000, no more than 50,000, no more than 10,000, no more than 5000, no more than 1000, or no more than 100 component value sets. In some embodiments, the plurality of component value sets consists of from 10 to 5000, from 500 to 10,000, from 10,000 to 500,000, from 20,000 to 1 million, from 1 million to 5 million, or from 2 million to 10 million component value sets. In some embodiments, the plurality of component value sets falls within another range starting no lower than 10 component value sets and ending no higher than 10 million component value sets.

In some embodiments, the subset of principal components comprises at least 2, at least 5, at least 10, at least 20, at least 50, at least 100, at least 500, at least 1000, or at least 5000 principal components. In some embodiments, the subset of principal components comprises no more than 10,000, no more than 5000, no more than 1000, no more than 500, no more than 100, no more than 20, or no more than 10 principal components. In some embodiments, the subset of principal components consists of from 2 to 20, from 10 to 100, from 80 to 500, from 300 to 2000, or from 1000 to 10,000 principal components. In some embodiments, the subset of principal components falls within another range starting no lower than 2 principal components and ending no higher than 10,000 principal components.

In some embodiments, the method does not includes performing a dimensionality reduction.

### Determining Divergences.

Referring to Block 220, in some embodiments, the method further includes determining, for each respective model 132 in the plurality of models, a corresponding divergence 156 using a mathematical combination of a corresponding plurality of distances 154, where each respective distance in the corresponding plurality of distances represents a respective label in the plurality of labels and is between (i) the component value sets 152 for the respective label subset of validation samples 122 assigned the respective label and (ii) the component value sets for all other samples in the plurality of samples.

In some embodiments, each respective distance is obtained between different label subsets of validation samples, where each respective label subset of validation samples corresponds to a respective label in the plurality of labels. In some embodiments, each respective distance is a statistical distance.

Consider, for instance, referring again to the example above, the dimension-reduced new tensor of shape (N, D_pca), where N is the number of validation samples in the validation set, and D_pca is the reduced dimensionality of the output. For each respective validation sample in N, for each respective dimension in D_pca, the plurality of component value sets comprises a respective component value for the respective validation sample. Then, in the illustrative example, component values across the plurality of dimensions for a first validation sample N₁ represent a first distribution of component values, and component values across the plurality of dimensions for a second validation sample N₂ represent a second distribution of component values, where the first validation sample has the first label and the second validation sample has the second label. The distance (e.g., statistical distance) between the two distributions can then be obtained. In some embodiments, the distance is determined to evaluate the ability of the model, at the respective layer for the output, to segregate validation samples between at least a first label and a second label in the plurality of labels.

In some embodiments, for each respective model in the plurality of models, the corresponding divergence is determined as a summation of the distance between a distribution of component value sets for each respective dimension in the plurality of dimensions relative to a distribution of component value sets for each other respective dimension in the plurality of dimensions.

Consider, for instance, referring again to the example above, the dimension-reduced new tensor of shape (N, D_pca), where N is the number of validation samples in the validation set, and D_pca is the reduced dimensionality of the output. For each respective dimension in D_pca, for each respective validation sample in N, the plurality of component value sets comprises a respective component value for the respective dimension. Then, in the illustrative example, component values across the plurality of validation samples for a first dimension Di represent a first distribution of component values, and component values across the plurality of validation samples for a second dimension D₂ represent a second distribution of component values. The distance between the two distributions can then be obtained. In some embodiments, the plurality of dimensions is a plurality of components (*e*.*g*., dimension-reduced components). In some embodiments, as described above, one or more dimensions in the plurality of dimensions represents a corresponding one or more labels in the plurality of labels.

In some embodiments, the distance is determined without performing dimension reduction (*e*.*g*., on an unreduced tensor of shape (N, D)).

Referring to Block 222, in some embodiments, each distance in the corresponding plurality of distances is determined in a pairwise manner, between (i) the component value sets for the respective label subset of validation samples and (ii) the component value sets for corresponding label subsets for each other label in the plurality of labels. In some embodiments, the distance is determined in a pairwise manner between validation samples within different label subsets and/or between dimensions (e.g., between components and/or labels).

In some embodiments, for each respective label subset of validation samples, the mathematical combination of the corresponding plurality of distances is determined relative to all other samples in the plurality of samples by summing a plurality of pairwise statistical distances obtained between the respective label subset and each other label subset assigned the respective label in the plurality of labels.

Referring to Block 224, in some embodiments, the mathematical combination of the corresponding plurality of distances is a summation of the corresponding plurality of distances.

Thus, in some implementations, the divergence is determined using a one-vs-rest approach between each validation sample within a first subset relative to each validation sample in each other subset other than the first subset. Alternatively or additionally, in some implementations, the divergence is determined using a one-vs-rest approach between each dimension, component, and/or label relative to each other dimension, component, and/or label.

Referring to Block 226, in some embodiments, the corresponding divergence is selected from the group consisting of: total variation distance, Hellinger distance, Lévy-Prokhorov metric, Wasserstein metric, Mahalanobis distance, Amari distance, Kullback-Leibler divergence, Rényi divergence, Jensen-Shannon divergence, Bhattacharyya distance, f-divergence, and discriminability index. Other statistical measures are contemplated for use herein, as will be apparent to one skilled in the art.

Referring to Block 228, in some embodiments, the corresponding divergence is Jensen-Shannon divergence. JS divergence is an asymmetric metric that measures the relative entropy or difference in information represented by two distributions. Based on Kullback-Leibler (KL) Divergence, JS divergence can be thought of as a method for measuring the distance, or similarity, between two probability distributions to determine how different the two distributions are from each other. For example, FIGS. 4A-B illustrate obtaining a divergence following a dimensionality reduction step as a PCA-reduced JS divergence (measurement indicated by dashed circle).

Thus, in some embodiments, the method includes obtaining, for each respective model in the plurality of models, a corresponding divergence that indicates how well the model segregates the validation samples in a label-dependent manner.

### Model Selection.

Referring to Block 230, in some embodiments, the method further includes identifying a first model 132 in the plurality of models having a corresponding divergence 156 satisfying a threshold to perform the first categorical task. In some embodiments, a respective model satisfies the threshold when it has the largest corresponding divergence among the plurality of models. In some embodiments, a respective model satisfies the threshold when it has a corresponding divergence within the top N largest corresponding divergences. In some embodiments, N is a positive integer between 1 and 5. In some embodiments, N is at least 1, at least 2, at least 3, or at least 5. In some embodiments, N is no more than 10, no more than 5, or no more than 3. In some embodiments, N is between 1 and 5, from 2 and 8, or from 5 and 10. In some embodiments, N falls within another range starting no lower than 1 and ending no higher than 10. In some embodiments, a respective model satisfies the threshold when it has a corresponding divergence within the top N percent of largest corresponding divergences. In some embodiments, N is no more than 1%, no more than 5%, no more than 10%, no more than 20%, or no more than 40%. In some embodiments, N is at least 50%, at least 40%, at least 20%, at least 10%, or at least 5%. In some embodiments, N is between 5% and 50%, between 2% and 30%, or between 1% and 10%. In some embodiments, N falls within another range starting no lower than 1 and ending no higher than 50%.

In some embodiments, the identifying further comprises selecting a subset of models in the plurality of models having the top N largest corresponding divergences. In some embodiments, N is a positive integer between 1 and 5. In some embodiments, N is at least 1, at least 2, at least 3, or at least 5. In some embodiments, N is no more than 10, no more than 5, or no more than 3. In some embodiments, N is between 1 and 5, from 2 and 8, or from 5 and 10. In some embodiments, N falls within another range starting no lower than 1 and ending no higher than 10.

Referring to Block 232, in some embodiments, the method further includes retraining the first model to perform the first categorical task. In some implementations, the retraining comprises performing a training procedure using the first model on a plurality of training samples to perform the first task.

In some embodiments, the method further includes fine-tuning the first model to perform the first task.

In some embodiments, the method further includes, after the retraining and/or fine-tuning, determining a validation score for the first model. In some embodiments, the validation score is selected from the group consisting of precision, recall, and F 1 score.

Referring to Block 234, in some embodiments, the method further includes, prior to the retraining, identifying a subset of layers in a plurality of layers of the first model, and removing layers other than the subset of layers from the first model. In some embodiments, the identifying the subset of layers comprises updating the architecture of the first model.

In some embodiments, the updating the architecture of the model includes A) inputting, for each respective validation sample in a plurality of validation samples, corresponding information into the model to obtain as output from each respective layer in a plurality of layers of the model, a corresponding spectrum comprising a corresponding plurality of values, thereby obtaining a plurality of spectra having a total variance, where the model was pretrained on a respective task other than the first categorical task and where each layer in the model comprises a corresponding set of pretrained weights; B) performing dimensionality reduction on the plurality of spectra to obtain a plurality of component value sets that collectively have an explained variance of at least a threshold amount of the total variance, where the plurality of component value sets includes a corresponding component value set for each respective layer in the plurality of layers; C) determining a first layer in the plurality of layers associated with a component value set in the plurality of component value sets having the highest dimensionality; and D) removing each layer in the plurality of layers downstream of the first layer, thereby updating the architecture of the model to perform the first task.

Nonlimiting example methods for updating or optimizing a model to perform a first categorical task are described in further detail below, with reference to FIGS. 3A-C.

### Example Embodiments for Updating Models to Perform a Task.

FIGS. 3A-C collectively show a flowchart for an example method 300 for updating an architecture of a model 132 to perform a first categorical task, in which dashed boxes represent optional portions of the method, in accordance with some embodiments of the present disclosure. In some embodiments, the method is performed at a computer system that includes one or more processors and memory. In some embodiments, the method is performed by modules of the computer system 100 as detailed elsewhere herein.

Referring to Block 302, in some embodiments, the method includes inputting, for each respective validation sample 122 in a plurality of validation samples, corresponding information into the model 132 to obtain as output from each respective layer 136 in a plurality of layers of the model 132, a corresponding spectrum 142 comprising a corresponding plurality of values, thereby obtaining a plurality of spectra having a total variance, where the model was pretrained on a respective task other than the first categorical task and where each layer 136 in the model comprises a corresponding set of pretrained weights 134.

For example, referring again to FIG. 4A, a measurement is obtained using output from each respective hidden layer in the plurality of N hidden layers. Similarly, FIG. 4B illustrates measurements obtained using outputs from each respective layer in the plurality of hidden layers. Measurements are indicated by solid circles.

Referring to Block 304, in some embodiments, the first categorical task comprises determining a patient-medication relationship, determining a patient-biomarker association, or determining a disease condition.

Referring to Block 306, in some embodiments, the model is selected from the group consisting of: a language model, a transformer model, a large language model (LLM), an encoder, a decoder, an encoder-decoder hybrid model, a generative pre-trained transformer (GPT) model, and a Bidirectional Encoder Representations from Transformers (BERT) model. In some embodiments, the model is selected from the group consisting of: BERT, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, T5, and/or any derivative or combination thereof. In some embodiments, the model is any of the models disclosed elsewhere herein (*see,* for example, the sections entitled "Definitions: Models," and "Example Embodiments for Identifying Models to Perform a Task," above). In some embodiments, the model is pretrained using a set of nonspecific pretraining samples.

In some embodiments, the model is pretrained using a set of domain-specific pretraining samples. In some embodiments, the domain is associated with the first categorical task. In some embodiments, the model is fine-tuned for the first categorical task.

Referring to Block 308, in some embodiments, the plurality of layers comprises at least 5, at least 10, or at least 15 layers.

Referring to Block 310, in some embodiments, each respective layer in the plurality of layers comprises a plurality of at least 5, at least 10, or at least 15 nodes.

Referring to Block 312, in some embodiments, for each respective layer in the plurality of layers, the output is obtained from a first node in the plurality of nodes.

As described above, in some embodiments, the model comprises at least 2, at least 5, at least 10, at least 20, at least 50, at least 100, or at least 500 layers. In some embodiments, the model comprises no more than 1000, no more than 500, no more than 100, no more than 50, or no more than 10 layers. In some embodiments, the model consists of from 2 to 20, from 5 to 100, from 50 to 300, from 200 to 500, or from 300 to 1000 layers. In some embodiments, the model falls within another range starting no lower than 2 layers and ending no higher than 1000 layers.

As described above, in some embodiments, for a respective hidden layer in the plurality of hidden layers, the output is obtained from a respective node in a plurality of nodes for the respective hidden layer. For instance, FIG. 4A illustrates that the output is obtained from a first node in a plurality of nodes (*e*.*g*., node 1) in each hidden layer used to obtain the measurement (*e*.*g*., measurement indicated by solid circles). However, while FIG. 4A illustrates outputs obtained from a first node, outputs from any node in a respective hidden layer are contemplated, as will be apparent to one skilled in the art. In some embodiments, each respective hidden layer in the plurality of hidden layers comprises a plurality of nodes. In some embodiments, the output is obtained from any node in the plurality of nodes. In some embodiments, the output is obtained from the same node for each respective layer in the plurality of layers (*e*.*g*., the first node of each layer, the second node of each layer, the second-to-last node of each layer, the last node of each layer, *etc.).* In some embodiments, for a first layer in the plurality of layers, the output is obtained from a different node relative to a second layer (*e*.*g*., the first node of the first layer and the second node of the second layer).

In some embodiments, a respective layer in a plurality of layers comprises at least 2, at least 5, at least 10, at least 20, at least 50, at least 100, at least 500, at least 1000, at least 10,000, or at least 100,000 nodes. In some embodiments, the plurality of nodes in a respective layer comprises no more than 1 million, no more than 100,000, no more than 10,000, no more than 1000, no more than 500, no more than 100, no more than 50, or no more than 10 nodes. In some embodiments, the plurality of nodes in a respective layer consists of from 2 to 20, from 5 to 100, from 50 to 300, from 200 to 500, from 300 to 1000, from 1000 to 10,000, or from 10,000 to 1 million nodes. In some embodiments, the plurality of nodes in a respective layer falls within another range starting no lower than 2 nodes and ending no higher than 1 million nodes.

In some embodiments, the corresponding set of pretrained weights comprises at least 1000 weights.

In some embodiments, the model is selected by a method for identifying a model to perform a first categorical task, comprising A) inputting, into each respective model in a plurality of models, wherein each respective model in the plurality of models was pretrained on a respective task other than the first categorical task and each respective model comprises a corresponding plurality of layers comprising a corresponding input layer, a corresponding output layer, and a corresponding plurality of hidden layers, for each respective validation sample in a plurality of validation samples, corresponding information into the respective model to obtain, through application of a corresponding plurality of parameters of the respective model against the corresponding information, output from a respective hidden layer in the corresponding plurality of hidden layers in the form of a corresponding spectrum comprising a corresponding plurality of values, wherein the plurality of validation samples comprises, for each respective label in a plurality of labels, a corresponding label subset of validation samples assigned the respective label, thereby obtaining, for each respective model in the plurality of models, a corresponding plurality of spectra having a corresponding total variance; B) performing, for each respective model in the plurality of models, dimensionality reduction on the corresponding plurality of spectra to obtain a corresponding plurality of component value sets that collectively have an explained variance of at least a threshold amount of the total variance, wherein the corresponding plurality of component value sets includes a corresponding component value set for each respective validation sample in the plurality of validation samples; C) determining, for each respective model in the plurality of models, a corresponding divergence using a mathematical combination of a corresponding plurality of distances, wherein each respective distance in the corresponding plurality of distances represents a respective label in the plurality of labels and is between (i) the component value sets for the respective label subset of validation samples assigned the respective label and (ii) the component value sets for all other samples in the plurality of samples; and D) identifying a first model in the plurality of models having a corresponding divergence satisfying a threshold to perform the first task.

In some embodiments, the model comprises or is selected using any of the embodiments disclosed elsewhere herein (*see,* for example, the section entitled "Example Embodiments for Identifying Models to Perform a Task," above).

In some embodiments, each respective validation sample in the plurality of validation samples comprises all or a portion of an electronic health record (EHR) or electronic medical record (EMR). In some embodiments, a respective validation sample in the plurality of validation samples comprises any of the embodiments for validation samples as described above *(see,* for example, the section entitled "Example Embodiments for Identifying Models to Perform a Task," above)

In some embodiments, the corresponding information for each respective validation sample in the plurality of validation samples comprises one or more corresponding snippets.

In some embodiments, the plurality of validation samples comprises a corresponding label subset of validation samples for each respective label in a plurality of labels. In some embodiments, as described above, the plurality of validation samples collectively represent a plurality of labels, and each respective validation sample in the plurality of validation samples comprises a corresponding label in the plurality of labels.

In some embodiments, the plurality of validation samples comprises at least 100 validation samples.

In some embodiments, the output from the model is obtained by applying the corresponding set of pretrained weights against the information for each validation sample in the plurality of validation samples.

In some embodiments, for each respective validation sample in the plurality of validation samples, the corresponding spectrum comprises a plurality of dimensions.

Referring to Block 313, in some embodiments, the method further includes performing dimensionality reduction on the plurality of spectra 142 to obtain a plurality of component value sets 152 that collectively have an explained variance of at least a threshold amount of the total variance, where the plurality of component value sets 152 includes a corresponding component value set for each respective layer 136 in the plurality of layers.

Referring to Block 314, in some embodiments, the dimensionality reduction is a principal component analysis algorithm, a random projection algorithm, an independent component analysis algorithm, or a feature selection method.

Referring to Block 316, in some embodiments, the dimensionality reduction is a principal component analysis (PCA) reduction and the dimensionality reduction decomposes the plurality of spectra to a respective subset of principal components.

Referring to Block 318, in some embodiments, the threshold amount of the total variance is at least 90%, at least 95%, or at least 99% of the total variance.

Referring to Block 320, in some embodiments, the method further includes determining a first layer 136 in the plurality of layers associated with a component value set 152 in the plurality of component value sets having the highest dimensionality 158.

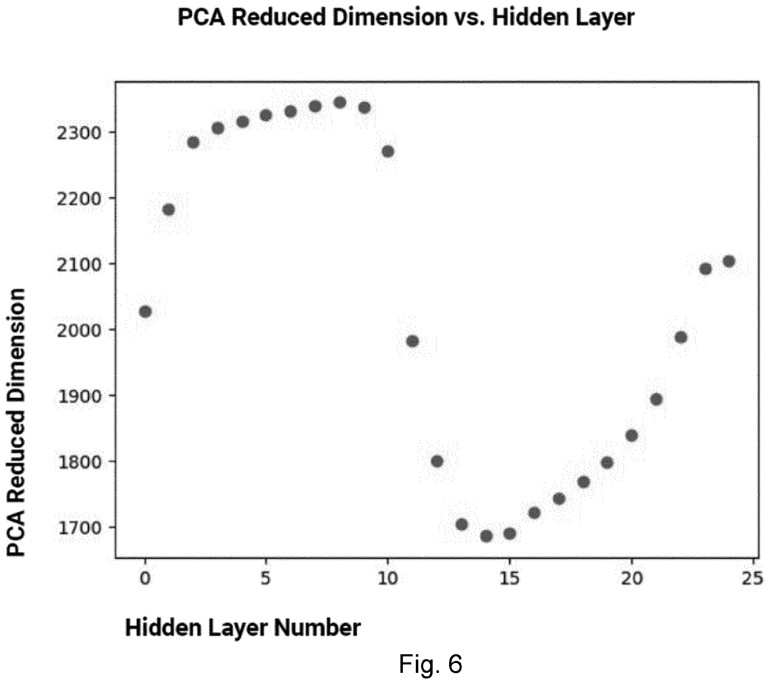

Referring to Block 322, in some embodiments, the dimensionality comprises a plurality of principal components determined using the dimensionality reduction. In some embodiments, the dimensionality is a PCA-reduced dimensionality. For instance, referring again to FIGS. 4A-B, in some embodiments, the method comprises obtaining from each respective hidden layer in the plurality of hidden layers of the model, a PCA-reduced dimensionality using output from the respective hidden layer (measurements indicated at each layer by solid circles). A layer (*e*.*g*., a first layer 136) having a highest or maximum PCA-reduced dimensionality is determined (*e*.*g*., layer M in FIG. 4A). FIG. 6 further illustrates an example plot of PCA-reduced dimensionality obtained for each hidden layer in a plurality of hidden layers in a model, where the maximum PCA-reduced dimensionality is identified as layer 8. All layers subsequent to layer 8 are shown to have lower PCA-reduced dimensionality.

Referring to Block 324, in some embodiments, the plurality of principal components comprises at least 10, at least 100, or at least 1000 principal components.

In some embodiments, the plurality of principal components comprises at least 2, at least 5, at least 10, at least 20, at least 50, at least 100, at least 500, at least 1000, or at least 5000 principal components. In some embodiments, the plurality of principal components comprises no more than 10,000, no more than 5000, no more than 1000, no more than 500, no more than 100, no more than 20, or no more than 10 principal components. In some embodiments, the plurality of principal components consists of from 2 to 20, from 10 to 100, from 80 to 500, from 300 to 2000, or from 1000 to 10,000 principal components. In some embodiments, the plurality of principal components falls within another range starting no lower than 2 principal components and ending no higher than 10,000 principal components.

In some embodiments, the dimensionality is determined using a JS divergence and/or a PCA-reduced JS divergence. Non-limiting example methods for determining JS divergence are described elsewhere herein (*see, e.g.,* the section entitled "Example Embodiments for Identifying Models to Perform a Task," above).

Referring to Block 326, in some embodiments, the method further includes removing each layer 136 in the plurality of layers downstream of the first layer, thereby updating the architecture of the model 132 to perform the first categorical task. For example, as illustrated in FIGS. 4A-B, after determining the layer *(e.g.,* the first layer 136) having the highest or maximum PCA-reduced dimensionality is determined (*e*.*g*., layer M in FIG. 4A or layer 8 in FIG. 6), each layer subsequent to the layer having the maximum PCA-reduced dimensionality, and having lower than maximum PCA-reduced dimensionality, are removed from the model *(e.g.,* all layers after layer M in FIG. 4A or all layers after layer 8 in FIG. 6).

As described above, in some embodiments, the model comprises a plurality of hidden layers. Without being limited to any one theory of operation, lower layers are likely to better facilitate lower resolution discrimination or classification, whereas higher layers are likely to fine-tune or facilitate the model's ability to perform high resolution discrimination or classification with greater specificity for fine details that are tailored to the model's intended task or domain. As such details may not be relevant to the task or domain of interest, it is advantageous to remove such higher layers while retaining the underlying engine encompassed by the lower layers.

Referring to Block 328, in some embodiments, the model further comprises a task-dependent output layer downstream of the plurality of layers, and the removing further comprises removing the task-dependent output layer. For instance, in some embodiments, an output layer is a classifier head that generates a task-dependent classification. In some embodiments, the method further includes adding a task-dependent output layer downstream of the plurality of layers, where the task-dependent output layer is specific for the first categorical task.

Referring to Block 330, in some embodiments, the method further includes retraining the updated model to perform the first categorical task. For instance, as illustrated in FIG. 4A, in some embodiments, the updated model comprises an architecture including only the layers up to layer M that has the maximum PCA-reduced dimensionality (where all layers subsequent to layer M are removed). Output from layer M is then used as input to a classifier head in order to retrain the updated model to perform the first categorical task.

In some embodiments, the retraining comprises performing a training procedure using the first model on a plurality of training samples to perform the first categorical task.

### Additional Embodiments.

Yet another aspect of the present disclosure provides a computer system comprising one or more processors and a non-transitory computer-readable medium including computer-executable instructions that, when executed by the one or more processors, cause the processors to perform any of the methods and/or embodiments disclosed herein.

Still another aspect of the present disclosure provides a non-transitory computer-readable storage medium having stored thereon program code instructions that, when executed by a processor, cause the processor to perform any of the methods and/or embodiments disclosed herein.

Any of the embodiments disclosed herein for selecting a model to perform a first categorical task *(see, e.g.,* the section entitled "Example Embodiments for Identifying Models to Perform a Task," above) are similarly contemplated for use in methods for updating an architecture of a model to perform the first task, as will be apparent to one skilled in the art. Moreover, any of the embodiments disclosed herein for updating or optimizing a model to perform a first task *(see, e.g.,* the section entitled "Example Embodiments for Updating Models to Perform a Task," above) are similarly contemplated for use in methods to select a model to perform the first task, as will be apparent to one skilled in the art.

### EXAMPLES.

### Example 1 - Example comparison of models identified using PCA-reduced JS divergence.

Several pretrained deep learning models (DLMs) were obtained to evaluate which could be used for patient-medication relationship modeling. The models included three pretrained models trained on general domain data with no fine-tuning (BERT Base, BERT Large, and RoBERTa Base), one pretrained model trained on a domain related to the task of interest (BioBERT Base, trained on the biomedical domain), one pretrained model trained on a different domain not related to the task of interest but fine-tuned to perform a similar task (RoBERTa Base Twitter Sentiment Finetune), and an untrained model (BERT Base Untrained). Validation samples included snippets of text obtained from electronic health records and labeled with various class labels associated with patient-medication relationships.

For each model, a PCA-reduced JS divergence was obtained using the methods disclosed herein, including: inputting, into each respective model in a plurality of models, for each respective validation sample in the plurality of validation samples, corresponding information into the respective model to obtain, through application of a corresponding plurality of parameters of the respective model against the corresponding information, output from a layer of the respective model in the form of a corresponding spectrum, thereby obtaining a corresponding plurality of spectra for the respective model. PCA was performed on the spectra for each model and the PCA dimensionality was reduced to the number of components that explained 99% of the variance in the data, thus obtaining PCA-reduced spectra. For each respective model in the plurality of models, JS divergence was determined between the class labels in a one-vs-rest fashion for each component, as a summation of the distances between the component value sets for each respective subset of validation samples (*e.g.,* each first label) and the component value sets for corresponding label subsets for each other label in the plurality of labels (*e.g.,* each other respective subset of validation samples corresponding to other labels other than the first label). The PCA-reduced JS divergences for each evaluated model is shown in Table 1.

**Table 1: PCA-Reduced JS Divergence for Evaluating Models**

| **Model Name** | **PCA-Reduced JS Divergence** |
|---|---|
| BERT Base | 193 |
| BERT Large | 261 |
| RoBERTa Base | 129 |
| BioBERT Base | 186 |
| RoBERTa Base Twitter Sentiment FineTune | 112 |
| BERT Base Untrained | 139 |

In Table 1, the BERT Large pretrained model had the highest PCA-reduced JS divergence.

Each model was then trained on training data to evaluate whether the PCA-reduced JS divergence correlated well with the model's actual ability to perform patient-medication relationship modeling.

The training data included text snippets labeled with weak labels "administered," "ordered," "considering," "refused," and "null." Multi-labeled examples were removed to maintain the simplicity of the experiment. Mixed precision training was performed with batch size 64, using the AdamW optimizer with learning rate = 1 × 10⁻⁵ and default parameters. Training was performed for as many epochs needed until a validation F 1 plateau was reached or until overfitting occurred. After the first epoch, the learning rate was reduced to 1 × 10⁻⁶. Overfitting was determined by measuring Wilcoxon Rank Sums test p-value between the unreduced loss distributions of the validation and training sets.

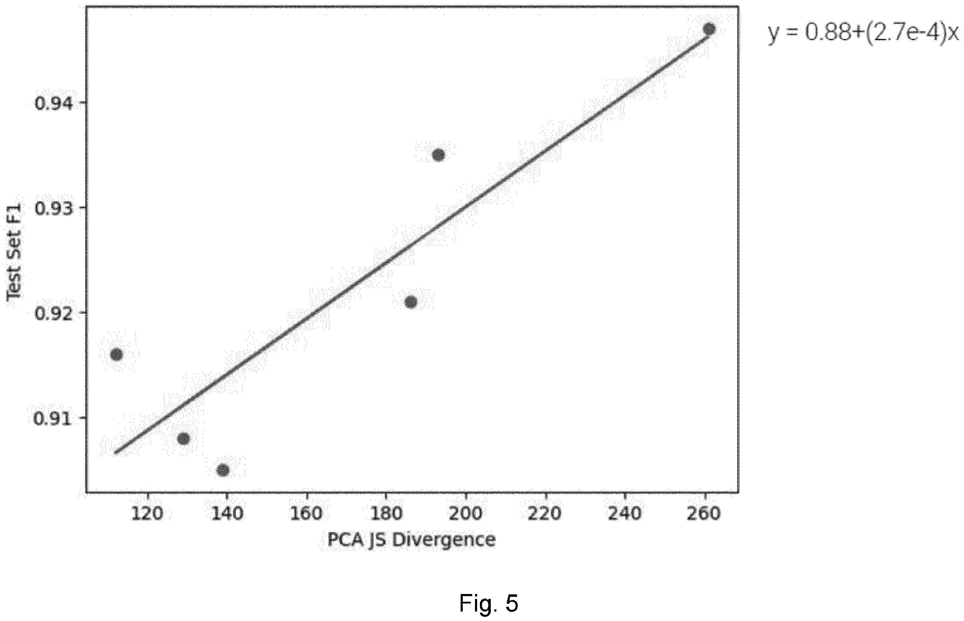

The results of the model training and validation are shown in Table 2 and FIG. 5.

**Table 2: Model Training Results on Patient-Medication Relationships**

| **Model Name** | **PCA-Reduced JS Divergence** | Precision | Recall | F1 Score |
|---|---|---|---|---|
| BERT Base | 193 | 0.928 | 0.944 | 0.935 |
| **BERT Large** | **261** | **0.938** | **0.957** | **0.947** |
| RoBERTa Base | 129 | 0.872 | 0.952 | 0.908 |
| BioBERT Base | 186 | 0.897 | 0.949 | 0.921 |
| RoBERTa Base Twitter Sentiment FineTune | 112 | 0.890 | 0.946 | 0.916 |
| BERT Base Untrained | 139 | 0.916 | 0.895 | 0.905 |

Table 2 and FIG. 5 illustrate that the BERT Large model performed the best after training, as predicted by its PCA-reduced JS divergence. This trend is also shown in FIG. 5, in which the F1 score correlated well with the PCA-reduced JS divergence across all of the evaluated models.

Notably, the domain-specific model did not necessarily lead to better downstream performance in similar domain. However, task-similar fine-tuning could be more beneficial to downstream performance than domain similarity. The untrained BERT model had somewhat comparable performance to other models.

The results of the experiment showed that there indeed is a correlation between the PCA reduced JS divergence and the macroscopic F1 of the test data. In this scenario, the choice of model had a big impact on the final performance.

### Example 2 - Example comparison of updated model versus nonupdated model using PCA-reduced dimensionality.

Pretrained models were evaluated to identify and optimize a model to perform a computer vision task, namely skin lesion classification.

A collection of skin lesion images including labels that describe the type of skin lesion in the image was obtained from a database (the Huggingface Datasets hub). The classes are as follows: actinic_keratoses, benign_keratosis-like_lesions, basal_cell_carcinoma, dermatofibroma, vascular_lesions, melanoma, and melanocytic_Nevi.

Several popular pretrained vision models were then evaluated for PCA-reduced JS divergence in the manner described in Example 1 above. These models and their corresponding PCA-reduced JS divergences are shown as follows:
google/vit-large-patch32-384: 2559
google/vit-base-patch16-224: 2554
microsoft/beit-large-patch16-224-pt22k-ft22k: 2527
facebook/convnext-xlarge-224-22k: 2518
microsoft/resnet-50: 2466

Validation of these models, as described in Example 1 above, showed that, even in this domain and modality, greater PCA-reduced JS divergence of the model output spectra still holds predictive power over the final downstream performance.

As the google VIT Large patch 32-384 model was found to have the largest PCA-reduced JS divergence, this model was selected for further optimization.

The PCA-reduced dimensionality and PCA-reduced JS divergence of the spectra for the output of each hidden layer was then examined to evaluate the benefit to removing certain layers from the model. The spectra for each layer was collected and PCA reduced in accordance with the methods disclosed herein. Briefly, corresponding information for skin lesion images was inputted into the selected model. Output was obtained from each respective layer in the model as a corresponding spectrum, thereby obtaining a plurality of spectra. PCA was performed on the spectra for each layer and the PCA dimensionality was reduced to the number of components that explained 99% of the variance in the data, thus obtaining PCA-reduced spectra. Optionally, JS divergence was also calculated in a one-vs-rest fashion for each PCA-reduced spectra to further examine whether this metric correlated with PCA-reduced dimensionality.

As shown in FIG. 6, the layer with the largest PCA reduced dimension was found to be layer 8. The 8 hidden layer model and the full model were both trained on a training set of skin lesion images and the results were compared as shown in Tables 3 and 4.

**Table 3: Classification Results for 8-Layer Model**

| **Class Name** | **Precision** | **Recall** | **F1 Score** | **Support** |
|---|---|---|---|---|
| actinic_keratoses | 0.68 | 0.92 | 0.78 | 144 |
| benign_keratosis-like_lesions | 0.94 | 0.81 | 0.87 | 42 |
| basal_cell_carcinoma | 0.87 | 0.72 | 0.79 | 142 |
| dermatofibroma | 0.98 | 0.90 | 0.94 | 858 |
| vascular_lesions | 0.89 | 0.96 | 0.92 | 67 |
| melanoma | 1.00 | 0.89 | 0.94 | 18 |
| melanocytic_Nevi | 0.91 | 0.71 | 0.80 | 14 |

| **Average** | **Precision** | **Recall** | **F1 Score** | **Support** |
|---|---|---|---|---|
| micro avg | 0.92 | 0.88 | 0.90 | 1285 |
| macro avg | 0.90 | 0.84 | 0.86 | 1285 |
| weighted avg | 0.93 | 0.88 | 0.90 | 1285 |
| samples avg | 0.88 | 0.88 | 0.88 | 1285 |

**Table 4: Classification Results for Full Model**

| **Class Name** | **Precision** | **Recall** | **F1 Score** | **Support** |
|---|---|---|---|---|
| actinic_keratoses | 0.92 | 0.50 | 0.65 | 144 |
| benign_keratosis-like_lesions | 0.93 | 0.62 | 0.74 | 42 |
| basal_cell_carcinoma | 0.61 | 0.75 | 0.67 | 142 |
| dermatofibroma | 0.95 | 0.89 | 0.92 | 858 |
| vascular_lesions | 0.75 | 0.90 | 0.82 | 67 |
| melanoma | 1.00 | 1.00 | 1.00 | 18 |
| melanocytic_Nevi | 0.83 | 0.36 | 0.50 | 14 |

| **Average** | **Precision** | **Recall** | **F1 Score** | **Support** |
|---|---|---|---|---|
| micro avg | 0.88 | 0.82 | 0.85 | 1285 |
| macro avg | 0.86 | 0.72 | 0.76 | 1285 |
| weighted avg | 0.90 | 0.82 | 0.85 | 1285 |
| samples avg | 0.82 | 0.82 | 0.82 | 1285 |

As can be seen from Tables 3 and 4, the 8-layer fine-tuned model far outperformed the full fine-tuned model. In other words, it was found that the layer which yielded the highest PCA-reduced dimensionality, as illustrated in FIG. 6, led to the strongest results. In fact, the full model when trained yielded a macroscopic test F1 score of 0.76, yet the same model with layers only up to layer 8 (the layer having the maximum PCA-reduced dimensionality) yielded a macroscopic test F1 score of 0.86, which was considerably better.

Advantageously, these results show that the presently disclosed systems and methods can be used to identify a subset of a model that performs as well or better than an existing pretrained model on a given task. By identifying and optimizing such models to smaller subsets, the training, validating, fine-tuning, and/or use (*e.g.,* modeling, predicting, and/or classifying) of the model can be performed faster and in a less computationally expensive manner. Thus, the presently disclosed systems and methods improve the efficiency of such modeling tasks (*e.g.,* using a subset of layers) relative to existing models (*e.g.,* using a preexisting, full-sized pretrained model).

### CONCLUSION

The foregoing description, for purposes of explanation, has been described with reference to specific implementations. However, the illustrative discussions above are not intended to be exhaustive or to limit the implementations to the precise forms disclosed. Many modifications and variations are possible in view of the above teachings. The implementations were chosen and described in order to best explain the principles and their practical applications, to thereby enable others skilled in the art to best utilize the implementations and various implementations with various modifications as are suited to the particular use contemplated.

Disclosed Items:
1. A method for identifying a model to perform a first categorical task, comprising: at a computer system that includes one or more processors and memory:
   A) inputting, into each respective model in a plurality of models, wherein each respective model in the plurality of models was pretrained, at least in part, on a respective task other than the first categorical task and each respective model comprises a corresponding plurality of layers comprising a corresponding input layer, a corresponding output layer, and a corresponding plurality of hidden layers, for each respective validation sample in a plurality of validation samples, corresponding information into the respective model to obtain, through application of a corresponding plurality of parameters of the respective model against the corresponding information, output from a respective hidden layer in the corresponding plurality of hidden layers in the form of a corresponding spectrum comprising a corresponding plurality of values, wherein the plurality of validation samples comprises, for each respective label in a plurality of labels, a corresponding label subset of validation samples assigned the respective label, thereby obtaining, for each respective model in the plurality of models, a corresponding plurality of spectra having a corresponding total variance across the corresponding plurality of values for each respective validation sample in the plurality of validation samples;
   B) performing, for each respective model in the plurality of models, dimensionality reduction on the corresponding plurality of spectra to obtain a corresponding plurality of component value sets that collectively have an explained variance of at least a threshold amount of the total variance, wherein the corresponding plurality of component value sets includes a corresponding component value set for each respective validation sample in the plurality of validation samples;
   C) determining, for each respective model in the plurality of models, a corresponding divergence using a mathematical combination of a corresponding plurality of distances, wherein each respective distance in the corresponding plurality of distances represents a respective label in the plurality of labels and is between (i) the component value sets for the respective label subset of validation samples assigned the respective label and (ii) the component value sets for all other samples in the plurality of samples; and
   D) identifying a first model in the plurality of models having a corresponding divergence satisfying a threshold to perform the first task.
2. The method of item 1, wherein the first task comprises determining a patient-medication relationship, determining a patient-biomarker association, or determining a disease condition.
3. The method of item 1 or 2, wherein a respective model in the plurality of models is selected from the group consisting of: a language model, a transformer model, a large language model (LLM), an encoder, a decoder, an encoder-decoder hybrid model, a generative pre-trained transformer (GPT) model, and a Bidirectional Encoder Representations from Transformers (BERT) model.
4. The method of any one of items 1-3, wherein a respective model in the plurality of models is selected from the group consisting of: BERT, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, and T5.
5. The method of any one of items 1-4, wherein one or more models in the plurality of models are pretrained using a set of nonspecific pretraining samples.
6. The method of any one of items 1-5, wherein one or more models in the plurality of models are pretrained using a set of domain-specific pretraining samples.
7. The method of item 6, wherein the domain is associated with the first task.
8. The method of any one of items 1-7, wherein one or more models in the plurality of models are fine-tuned for the first task.
9. The method of any one of items 1-8, wherein the plurality of models comprises at least 5 models.
10. The method of any one of items 1-9, wherein, for a respective model in the plurality of models, the corresponding plurality of parameters comprises at least 1000 parameters.
11. The method of any one of items 1-10, wherein each respective validation sample in the plurality of validation samples comprises all or a portion of an electronic health record (EHR) or electronic medical record (EMR).
12. The method of any one of items 1-11, wherein the corresponding information for each respective validation sample in the plurality of validation samples comprises one or more corresponding snippets.
13. The method of any one of items 1-12, wherein the plurality of validation samples comprises at least 100 validation samples.
14. The method of any one of items 1-13, wherein the dimensionality reduction is a principal component analysis algorithm, a random projection algorithm, an independent component analysis algorithm, or a feature selection method.
15. The method of any one of items 1-14, wherein the dimensionality reduction is a principal component analysis (PCA) reduction and wherein the dimensionality reduction decomposes the plurality of spectra to a respective subset of principal components.
16. The method of any one of items 1-15, wherein the threshold amount of the total variance is at least 90%, at least 95%, or at least 99% of the total variance.
17. The method of any one of items 1-16, wherein the corresponding plurality of distances are determined in a pairwise manner, between (i) the component value sets for the respective label subset of validation samples and (ii) the component value sets for corresponding label subsets for each other label in the plurality of labels.
18. The method of item 17, wherein the mathematical combination of the corresponding plurality of distances is a summation of the corresponding plurality of distances.
19. The method of any one of items 1-18, wherein the corresponding divergence is selected from the group consisting of: total variation distance, Hellinger distance, Lévy-Prokhorov metric, Wasserstein metric, Mahalanobis distance, Amari distance, Kullback-Leibler divergence, Rényi divergence, Jensen-Shannon divergence, Bhattacharyya distance, f-divergence, and discriminability index.
20. The method of any one of items 1-19, wherein the corresponding divergence is Jensen-Shannon divergence.
21. The method of any one of items 1-20, wherein a respective model satisfies the threshold when it has the largest corresponding divergence among the plurality of models.
22. The method of any one of items 1-20, wherein the identifying D) further comprises selecting a subset of models in the plurality of models having the top N largest corresponding divergences.
23. The method of item 22, wherein N is a positive integer between 1 and 5.
24. The method of any one of items 1-23, the method further comprising:
   E) retraining the first model to perform the first task.
25. The method of item 24, wherein the retraining comprises:
   performing a training procedure using the first model on a plurality of training samples to perform the first task.
26. The method of item 24 or 25, further comprising, prior to the retraining:
   identifying a subset of layers in a plurality of layers of the first model, and
   removing layers other than the subset of layers from the first model.
27. A method for updating the architecture of a model to perform a first categorical task, comprising:
   at a computer system that includes one or more processors and memory:
   A) inputting, for each respective validation sample in a plurality of validation samples, corresponding information into the model to obtain as output from each respective layer in a plurality of layers of the model, a corresponding spectrum comprising a corresponding plurality of values, thereby obtaining a plurality of spectra having a total variance, wherein the model was pretrained on a respective task other than the first categorical task and each layer in the model comprises a corresponding set of pretrained weights;
   B) performing dimensionality reduction on the plurality of spectra to obtain a plurality of component value sets that collectively have an explained variance of at least a threshold amount of the total variance, wherein the plurality of component value sets includes a corresponding component value set for each respective layer in the plurality of layers;
   C) determining a first layer in the plurality of layers associated with a component value set in the plurality of component value sets having the highest dimensionality; and
   D) removing each layer in the plurality of layers downstream of the first layer, thereby updating the architecture of the model to perform the first task.
28. The method of item 27, wherein the first task comprises determining a patient-medication relationship, determining a patient-biomarker association, or determining a disease condition.
29. The method of item 27 or 28 wherein the model is selected from the group consisting of: a language model, a transformer model, a large language model (LLM), an encoder, a decoder, an encoder-decoder hybrid model, a generative pre-trained transformer (GPT) model, and a Bidirectional Encoder Representations from Transformers (BERT) model.
30. The method of any one of items 27-29, wherein the model is selected from the group consisting of: BERT, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, and T5.
31. The method of any one of items 27-30, wherein the model is pretrained using a set of nonspecific pretraining samples.
32. The method of any one of items 27-31, wherein the model is pretrained using a set of domain-specific pretraining samples.
33. The method of item 32, wherein the domain is associated with the first task.
34. The method of any one of items 27-33, wherein the model is fine-tuned for the first task.
35. The method of any one of items 27-34, wherein the plurality of layers comprises at least 5, at least 10, or at least 15 layers.
36. The method of item 35, wherein each respective layer in the plurality of layers comprises a plurality of at least 5, at least 10, or at least 15 nodes.
37. The method of any one of items 27-36, wherein the corresponding set of pretrained weights comprises at least 1000 weights.
38. The method of any one of items 27-37, wherein the model is selected by a method for identifying a model to perform a first task, comprising:
   A) inputting, into each respective model in a plurality of models, wherein each respective model in the plurality of models was pretrained on a respective task other than the first categorical task and each respective model comprises a corresponding plurality of layers comprising a corresponding input layer, a corresponding output layer, and a corresponding plurality of hidden layers, for each respective validation sample in a plurality of validation samples, corresponding information into the respective model to obtain, through application of a corresponding plurality of parameters of the respective model against the corresponding information, output from a respective hidden layer in the corresponding plurality of hidden layers in the form of a corresponding spectrum comprising a corresponding plurality of values, wherein the plurality of validation samples comprises, for each respective label in a plurality of labels, a corresponding label subset of validation samples assigned the respective label, thereby obtaining, for each respective model in the plurality of models, a corresponding plurality of spectra having a corresponding total variance;
   B) performing, for each respective model in the plurality of models, dimensionality reduction on the corresponding plurality of spectra to obtain a corresponding plurality of component value sets that collectively have an explained variance of at least a threshold amount of the total variance, wherein the corresponding plurality of component value sets includes a corresponding component value set for each respective validation sample in the plurality of validation samples;
   C) determining, for each respective model in the plurality of models, a corresponding divergence using a mathematical combination of a corresponding plurality of distances, wherein each respective distance in the corresponding plurality of distances represents a respective label in the plurality of labels and is between (i) the component value sets for the respective label subset of validation samples assigned the respective label and (ii) the component value sets for all other samples in the plurality of samples; and
   D) identifying a first model in the plurality of models having a corresponding divergence satisfying a threshold to perform the first task.
39. The method of any one of items 27-38, wherein each respective validation sample in the plurality of validation samples comprises all or a portion of an electronic health record (EHR) or electronic medical record (EMR).
40. The method of any one of items 27-39, wherein the corresponding information for each respective validation sample in the plurality of validation samples comprises one or more corresponding snippets.
41. The method of any one of items 27-40, wherein the plurality of validation samples comprises at least 100 validation samples.
42. The method of any one of items 27-41, wherein the dimensionality reduction is a principal component analysis algorithm, a random projection algorithm, an independent component analysis algorithm, or a feature selection method.
43. The method of any one of items 27-42, wherein the dimensionality reduction is a principal component analysis (PCA) reduction and wherein the dimensionality reduction decomposes the plurality of spectra to a respective subset of principal components.
44. The method of any one of items 27-43, wherein the threshold amount of the total variance is at least 90%, at least 95%, or at least 99% of the total variance.
45. The method of any one of items 27-44, wherein the dimensionality comprises a plurality of principal components determined using the dimensionality reduction.
46. The method of item 45, wherein the plurality of principal components comprises at least 10, at least 100, or at least 1000 principal components.
47. The method of any one of items 27-46, wherein the model further comprises a task-dependent output layer downstream of the plurality of layers, and the removing further comprises removing the task-dependent output layer.
48. The method of any one of items 27-47, the method further comprising:
   E) retraining the optimized model to perform the first task.
49. The method of item 48, wherein the retraining comprises:
   performing a training procedure using the first model on a plurality of training samples to perform the first task.
50. A computer system comprising:
   one or more processors; and
   a non-transitory computer-readable medium including computer-executable instructions that, when executed by the one or more processors, cause the processors to perform the method according to any one of items 1-49.
51. A non-transitory computer-readable storage medium having stored thereon program code instructions that, when executed by a processor, cause the processor to perform the method according to any one of items 1-49.

## Claims

1. A method for updating the architecture of a model to perform a first categorical task, comprising:
at a computer system that includes one or more processors and memory:
A) inputting, for each respective validation sample in a plurality of validation samples, corresponding information into the model to obtain as output from each respective layer in a plurality of layers of the model, a corresponding spectrum comprising a corresponding plurality of values, thereby obtaining a plurality of spectra having a total variance, wherein the model was pretrained on a respective task other than the first categorical task and each layer in the model comprises a corresponding set of pretrained weights;
B) performing dimensionality reduction on the plurality of spectra to obtain a plurality of component value sets that collectively have an explained variance of at least a threshold amount of the total variance, wherein the plurality of component value sets includes a corresponding component value set for each respective layer in the plurality of layers;
C) determining a first layer in the plurality of layers associated with a component value set in the plurality of component value sets having the highest dimensionality; and
D) removing each layer in the plurality of layers downstream of the first layer, thereby updating the architecture of the model to perform the first task.

2. The method of claim 1, wherein the first task comprises determining a patient-medication relationship, determining a patient-biomarker association, or determining a disease condition.

3. The method of claim 1 or 2, wherein the model is selected from the group consisting of: a language model, a transformer model, a large language model (LLM), an encoder, a decoder, an encoder-decoder hybrid model, a generative pre-trained transformer (GPT) model, a Bidirectional Encoder Representations from Transformers (BERT) model, BERT Base, BERT Large, RoBERTa Base, BioBERT Base, RoBERTa Base Twitter Sentiment Finetune, DeBERTa, ALBERT, RoBERTa, GPT-J, GPT-Neo, GPT-NeoX, Pythia, GPT-NeoX 2.0, XLNet, LaMDA, PaLM, Gopher, Sparrow, Chinchilla, Minerva, Bard, GPT-1, GPT-2, GPT-3, CodeX, InstructGPT, ChatGPT, GPT-4, OPT, Galactica, LLaMA, BART, Flan-T5, Flan-UL2, and T5.

4. The method of any one of claims 1-3,
wherein the model is pretrained using a set of nonspecific pretraining samples or a set of domain-specific pretraining samples, and wherein the domain is associated with the first task, or
wherein the model is fine-tuned for the first task.

5. The method of any one of claims 1-4,
wherein the plurality of layers comprises at least 5, at least 10, or at least 15 layers, each respective layer in the plurality of layers comprises a plurality of at least 5, at least 10, or at least 15 nodes, or
wherein the corresponding set of pretrained weights comprises at least 1000 weights.

6. The method of any one of claims 1-5, wherein the model is selected by a method for identifying a model to perform a first task, comprising:
A) inputting, into each respective model in a plurality of models, wherein each respective model in the plurality of models was pretrained on a respective task other than the first categorical task and each respective model comprises a corresponding plurality of layers comprising a corresponding input layer, a corresponding output layer, and a corresponding plurality of hidden layers, for each respective validation sample in a plurality of validation samples, corresponding information into the respective model to obtain, through application of a corresponding plurality of parameters of the respective model against the corresponding information, output from a respective hidden layer in the corresponding plurality of hidden layers in the form of a corresponding spectrum comprising a corresponding plurality of values, wherein the plurality of validation samples comprises, for each respective label in a plurality of labels, a corresponding label subset of validation samples assigned the respective label, thereby obtaining, for each respective model in the plurality of models, a corresponding plurality of spectra having a corresponding total variance;
B) performing, for each respective model in the plurality of models, dimensionality reduction on the corresponding plurality of spectra to obtain a corresponding plurality of component value sets that collectively have an explained variance of at least a threshold amount of the total variance, wherein the corresponding plurality of component value sets includes a corresponding component value set for each respective validation sample in the plurality of validation samples;
C) determining, for each respective model in the plurality of models, a corresponding divergence using a mathematical combination of a corresponding plurality of distances, wherein each respective distance in the corresponding plurality of distances represents a respective label in the plurality of labels and is between (i) the component value sets for the respective label subset of validation samples assigned the respective label and (ii) the component value sets for all other samples in the plurality of samples; and
D) identifying a first model in the plurality of models having a corresponding divergence satisfying a threshold to perform the first task.

7. The method of any one of claims 1-6, wherein each respective validation sample in the plurality of validation samples comprises all or a portion of an electronic health record (EHR) or electronic medical record (EMR).

8. The method of any one of claims 1-7,
wherein the dimensionality reduction is a principal component analysis algorithm, a random projection algorithm, an independent component analysis algorithm, or a feature selection method, or
wherein the principal component analysis decomposes the plurality of spectra to a respective subset of principal components.

9. The method of any one of claims 1-8, wherein the threshold amount of the total variance is at least 90%, at least 95%, or at least 99% of the total variance.

10. The method of any one of claims 1-9, wherein the dimensionality comprises a plurality of principal components comprising at least 10, at least 100, or at least 1000 principal components.

11. The method of any one of claims 1-10, wherein the model further comprises a task-dependent output layer downstream of the plurality of layers, and the removing further comprises removing the task-dependent output layer.

12. The method of any one of claims 1-11, the method further comprising:
E) retraining the optimized model to perform the first task.

13. A computer system comprising:
one or more processors; and
a non-transitory computer-readable medium including computer-executable instructions that, when executed by the one or more processors, cause the processors to perform a method for updating the architecture of a model to perform a first categorical task, comprising:
A) inputting, for each respective validation sample in a plurality of validation samples, corresponding information into the model to obtain as output from each respective layer in a plurality of layers of the model, a corresponding spectrum comprising a corresponding plurality of values, thereby obtaining a plurality of spectra having a total variance, wherein the model was pretrained on a respective task other than the first categorical task and each layer in the model comprises a corresponding set of pretrained weights;
B) performing dimensionality reduction on the plurality of spectra to obtain a plurality of component value sets that collectively have an explained variance of at least a threshold amount of the total variance, wherein the plurality of component value sets includes a corresponding component value set for each respective layer in the plurality of layers;
C) determining a first layer in the plurality of layers associated with a component value set in the plurality of component value sets having the highest dimensionality; and
D) removing each layer in the plurality of layers downstream of the first layer, thereby updating the architecture of the model to perform the first task.

14. A non-transitory computer-readable storage medium having stored thereon program code instructions that, when executed by a processor, cause the processor to perform a method for updating the architecture of a model to perform a first categorical task, comprising:
A) inputting, for each respective validation sample in a plurality of validation samples, corresponding information into the model to obtain as output from each respective layer in a plurality of layers of the model, a corresponding spectrum comprising a corresponding plurality of values, thereby obtaining a plurality of spectra having a total variance, wherein the model was pretrained on a respective task other than the first categorical task and each layer in the model comprises a corresponding set of pretrained weights;
B) performing dimensionality reduction on the plurality of spectra to obtain a plurality of component value sets that collectively have an explained variance of at least a threshold amount of the total variance, wherein the plurality of component value sets includes a corresponding component value set for each respective layer in the plurality of layers;
C) determining a first layer in the plurality of layers associated with a component value set in the plurality of component value sets having the highest dimensionality; and
D) removing each layer in the plurality of layers downstream of the first layer, thereby updating the architecture of the model to perform the first task.
